Europäisches Patentamt

**European Patent Office**

**Office européen des brevets**

(11) Numéro de publication: **0 314 559 B1**

(12) **FASCICULE DE BREVET EUROPEEN**

(45) Date de publication de fascicule du brevet: **17.03.93** (51) Int. Cl.⁵: **G06F 7/72**

(21) Numéro de dépôt: **88402676.6**

(22) Date de dépôt: **24.10.88**

(54) **Circuit de calcul utilisant une arithmétique résiduelle.**

(30) Priorité: **30.10.87 FR 8715057**

(43) Date de publication de la demande:
**03.05.89 Bulletin 89/18**

(45) Mention de la délivrance du brevet:
**17.03.93 Bulletin 93/11**

(84) Etats contractants désignés:
**DE FR GB IT NL SE**

(56) Documents cités:
**GB-A- 1 235 676**

**1986 IEEE INTERNATIONAL SYMPOSIUM ON CIRCUITS AND SYSTEMS, San Jose, California, 5-7 mai 1986, vol. 1 des 3, pages 117-120, IEEE, New York, US; M.A. BAYOUMI: "Wafer scale integration for generic RNS structures"**

**NINETEENTH ASILOMAR CONFERENCE ON CIRCUITS, SYSTEMS & COMPUTERS, Pacific Grove, California, 6-8 novembre 1985, pages 48-52, IEEE Computer Society Press, New York, US; M.A. BAYOUMI: "Implementation of RNS multiplication in VLSI"**

(73) Titulaire: **THOMSON-CSF**
**51, Esplanade du Général de Gaulle**
**F-92800 Puteaux(FR)**

(72) Inventeur: **Wambergue, Claude-Alain**
**THOMSON-CSF SCPI 19, avenue de Messine**
**F-75008 Paris(FR)**

(74) Mandataire: **Benoit, Monique et al**
**THOMSON-CSF, SCPI, B.P. 329, 50, rue Jean-Pierre Timbaud**
**F-92402 Courbevoie Cédex (FR)**

Rank Xerox (UK) Business Services
(3.10/3.5x/3.0.1)

## Description

L'invention a principalement pour objet un circuit de calcul ou un calculateur utilisant une arithmétique résiduelle notamment sur les nombres complexes.

D'une part, il est connu de réaliser des circuits de calcul utilisant les bases à notation positionnelle. Dans une telle base tout nombre entier est décomposé de façon unique sur les éléments de la base qui généralement sont les puissances successives d'un entier.

Tout nombre entier A peut être écrit dans une base b sous la forme :

$$A = a_n b^n + a_{n-1} b^{n-1} + ...a_i b^i + ... + a_3 b^3 + a_2 b^2 + a_1 b + a_0$$

Il existe une correspondance biunivoque entre les nombres et les ensembles de coefficients $a_i$ de leur décomposition dans une base donnée

Les circuits de calcul à base de composants à semiconducteurs qui procèdent dans une base positionnelle utilisent principalement, pour des raisons technologiques la base 2. Ils sont limités en vitesse par l'opération de multiplication qui doit être décomposée en des opérations de décalage et d'addition et par la propagation des retenues.

D'autre part, on connaît l'arithmétique résiduelle qui permet d'effectuer des calculs indépendamment sur chaque chiffre (digit en terminologie anglo saxonne) donc de moindre ampleur et sans propagation de retenue. Elle a été décrite notamment dans "The Residue Number System" H.L. Garner IRE Trans. Elect. Comp. Juin 1959.

On sait également , par l'article de M.A. Bayoumi Nineteenth Asilomar Confêrence on Circuits, Systéms and Computers, November 6-8, 1985 P 48 - 52 qu'il est possible avec une arithmétique résiduelle de simplifier la réalisation des multiplications entre nombres réels en les transformant en additions d'indices. Cependant rien n'est suggéré pour étendre cette propriété aux nombres complexes bien que l'application d'une arithmétique résiduelle au domaine des nombres complexes soit déjà connue, notamment, par la demande de brevet britannique GB-A-1 235 676 qui décrit l'emploi des propriétés d'une arithmétique résiduelle pour transformer une multiplication entre nombres complexes en un ensemble de multiplications entre représentations réelles pouvant être tabulées.

La présente invention a pour but d'utiliser les propriétés d'une arithmétique résiduelle particulière pour ramener une multiplication entre deux nombres complexes à une simple addition d'indices beaucoup plus commode pour les circuits de calcul à base de composants à semiconducteurs.

Elle a pour objet un dispositif de calcul comportant :
- un module de codage numérique transcrivant des nombres complexes d'une notation positionnelle à une notation résiduelle;
- un module de calcul placé en sortie du circuit de codage numérique effectuant des calculs sur les composantes en notation résiduelle des nombres complexes ; et
- un module de décodage numérique placé en sortie du module de calcul transcrivant en notation positionnelle les résultats délivrés par le module de calcul en notation résiduelle.

Ce dispositif de calcul est remarquable en ce que son module de codage numérique transcrit les nombres complexes dans une notation résiduelle avec des résidus calculés modulo des nombres premiers $m_i$ de la forme $m_i = 4k + 3$ où K est un entier positif.

Selon une caractéristique avantageuse, le module de calcul comporte des moyens permettant d'associer à chaque nombre complexe un indice tel qu'une multiplication entre deux nombres complexes corresponde, de façon biunivoque, à une addition desdits indices.

L'invention sera mieux comprise au moyen de la description ci-après, et des figures annexées comme des exemples non limitatifs parmi lesquels :
- la figure 1 est un schéma d'une première variante de réalisation du dispositif selon l'invention ;
- la figure 2 est un schéma d'une seconde variante de réalisation du dispositif selon l'invention ;
- la figure 3 est un schéma d'une troisième variante de réalisation du dispositif selon l'invention ;
- la figure 4 est un quatrième exemple de réalisation du dispositif selon l'invention ;
- la figure 5 est un schéma d'un détail de réalisation des dispositifs selon l'invention ;
- la figure 6 est un schéma d'un détail de réalisation du dispositif illustré sur la figure 5 ;
- la figure 7 est un schéma des dispositifs selon l'invention ;
- la figure 8 est un schéma d'un principe connu mis en oeuvre dans le dispositif selon l'invention ;
- la figure 9 est un schéma d'un détail de réalisation du dispositif selon l'invention ;
- la figure 10 est un schéma d'un détail de réalisation du dispositif selon l'invention ;
- la figure 11 est un schéma d'un détail de réalisation du dispositif selon l'invention.

2

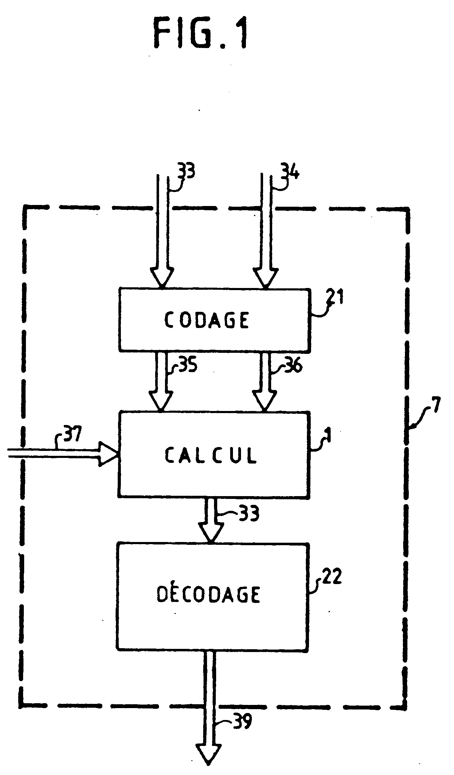

Sur les figures 1 à 11 on a utilisé les mêmes références pour désigner les mêmes éléments.

Nous allons rappeler ci-dessous des notations et des définitions couramment utilisées en mathématiques.

On admet que Z, l'ensemble des nombres entiers rationnels, est un ensemble ordonné.

Définissons la division de nombres entiers appelée division euclidienne.

Soient a et b, deux entiers, où b est un entier positif. La division de a par b est définie par :

$$a = b \cdot q + r, \qquad 0 \leq r < b$$

où q est le quotient et r le reste.

Quand r est nul, b et q sont des facteurs ou des diviseurs de a, on dit que b divise a.

Quand a n'a pas d'autres diviseurs que 1 et a, a est un nombre premier. Dans tous les autres cas, a est un nombre composé.

Le plus grand entier positif d qui divise deux entiers a et b est appelé le PGCD de a et b, noté d = (a, b).

Le théorème fondamental de l'arithmétique stipule que tout nombre est factorisable en un produit de puissances de nombres premiers :

$$a = \prod_i p_i \, c_i \text{ où } c_i \text{ est un entier,}$$

et que cette décomposition est unique.

Lorsque deux nombres a et b n'ont pas d'autres facteurs communs que 1, ils sont dits mutuellement premiers : d = (a, b) = 1.

Définissons la congruence et les résidus.

La division d'un entier a par un entier b produit un reste r. Tous les entiers qui donnent le même reste lorsqu'ils sont divisés par b peuvent être regardés comme appartenant à la même classe d'équivalence pour la relation d'équivalence :

$$a = bq + r$$

Deux entiers $a_1$ et $a_2$ appartenant à la même classe sont dits congruents modulo b et l'équivalence est notée :

$$a_1 \equiv a_2 \text{ modulo b (ou mod b)}$$

On ne s'intéresse en fait qu'au reste r de la division de a par b, et on appelle celui-ci le résidu de a modulo b, noté $r \equiv a$ modulo b.

Avec les congruences, la division n'est pas définie. On peut cependant définir quelque chose qui s'en approche en considérant la congruence :

$$a \cdot x \equiv c \bmod b$$

On montre que x n'existe que si d divise c, où d est le PGCD de a et b.

En particulier, si a et b sont mutuellement premiers (d = 1), la congruence :

$$a \cdot x \equiv 1 \bmod b$$

a une solution, et x est appelé l'inverse de a modulo b, noté $a^{-1}$. Lorsque le PGCD de a et de b vaut 1, on dit que a est un résidu quadratique de b si :

$$x^2 \equiv a \bmod b$$

admet une solution. Si cette congruence n'a pas de solution, a est un non-résidu quadratique de b.

Définissons les groupes :

Soit A un ensemble d'éléments a, b, c . . .

Supposons que l'on relie les éléments par l'opération, (ou relation binaire), T :

$$c = a \, q \, T \, b \text{ où a, b et c} \in A$$

Alors, on appelle groupe tout ensemble A remplissant les conditions suivantes :
- associativité :
$\forall a, b \in A,$

$a\,T\,(b\,T\,c)\ =\ (a\,T\,b)\,T\,c$

- identité :
$\exists\,e \in A,$

$e\,T\,a\ =\ a,\ \forall a \in A$

- inverse :
$\forall\,a \in A,\ \exists\,\bar{a} \in A,$

$a\,T\,\bar{a}\ =\ \bar{a}\,T\,a\ =\ e$

Lorsque l'opération T est commutative (a T b = b T a, $\forall$ a, b $\in$A), le groupe est dit abélien.

L'ordre d'un groupe est le nombre d'éléments de ce groupe.

Définissons les groupes cycliques :

Considérons un groupe fini (ayant un nombre fini d'éléments) et les opérations successives :

$a\,T\,a,\ a\,T\,a\,T\,a,\ a\,T\,a\,T\,a\,T\,a,...$

Chacune de ces opérations produit un élément du groupe. Comme celui-ci est fini, la séquence se répétera nécessairement elle-même avec une période r.

r est appelé l'ordre de l'élément a.

Si l'ordre d'un élément g est le même que l'ordre du groupe, tous les éléments du groupe sont engendrés par g avec les opérations :

$g,\ g\,T\,g,\ g\,T\,g\,T\,g,\ ...$

Dans ce cas, g est appelé élément générateur du groupe. Le groupe est un groupe cyclique.

Définissons l'anneau et le corps :

Un ensemble A est un anneau pour les deux opérations T et o si les conditions suivantes sont respectées :
- A est un groupe abélien pour la loi T ;
- si c = a o b, $\forall$ a et b $\in$A, alors c $\in$A ;
- associativité : a o (b o c) = (a o b) o c ;
- distributivité : a o (b T c) = (a o b) T (a o c)
  et (b T c) o a = (b o a) T (c o a)

L'anneau est commutatif si la loi o est commutative. L'anneau est un anneau unitaire s'il existe un (et un seul) élément identité u pour la loi o.

On vérifie facilement que l'ensemble des nombres entiers est un anneau par rapport à l'addition et à la multiplication.

Si on ajoute la condition que tout élément a possède un (et un seul) inverse $\bar{a}$, (a o $\bar{a}$ = u), alors l'anneau unitaire devient un corps.

On vérifie aisément que pour tout entier premier p, l'ensemble des entiers (0, 1, 2, . . . , p - 1) constitue un corps pour l'addition et la multiplication modulo p.

Tout corps fini est appelé corps de Galois, noté GF (p).

On peut montrer que dans tout corps de Galois, il existe des racines primitives g (ou éléments générateurs) qui engendrent tous les éléments du corps, sauf e, par les opérations successives : g o g, g o g o g, . . .

Soit un corps commutatif K. On dit que L est une extension de K, si L est un sur-corps de K (c'est-à-dire un corps dont K est un sous-corps) dont tout élément est racine d'une équation de degré fixé n à coefficients dans K. n est le degré de L par rapport à K.

4

Par exemple, le corps des nombres complexes C est un sur-corps de degré 2 du corps des nombres réels R, car tout nombre complexe z = a + ib est racine d'une équation du second degré à coefficients réels :

$$z^2 - 2\,a\,z + a^2 + b^2 = 0$$

Lorsque K est un corps fini GF (p), on note les extensions d'ordre d de GF (p) : GF ($p^d$). Ces corps ont un nombre d'éléments égal à $p^d$, où p est premier et d un nombre entier positif.

Définissons l'idéal d'un anneau.

Un idéal I d'un anneau commutatif A est un sous-anneau de A, tel que si l'on prend un élément y quelconque de I, et un élément a quelconque de A, l'élément a . y appartient encore à I.

Soit A un anneau commutatif unitaire. On appelle idéal principal de A le sous-ensemble de A formé à partir des multiples d'un élément arbitraire de A. Un anneau n'ayant que des idéaux principaux est dit anneau principal.

L'intersection de deux idéaux contient au moins l'élément nul (e) et est encore un idéal.

La somme de deux idéaux est un idéal.

Le produit de deux idéaux principaux I (a) et I (b) est l'idéal principal I (a . b).

Deux idéaux sont dits étrangers ou premiers entre eux si leur somme est l'anneau lui-même.

Un idéal non trivial (différent de { e } ou A) est maximal, ou premier absolu ou premier, s'il n'est contenu dans aucun autre idéal que l'anneau A lui-même.

Le produit de deux idéaux premiers est leur intersection.

Etant donné un idéal I dans un anneau commutatif A et un élément x de A, on appelle classe latérale de I, caractérisée par x, l'ensemble des éléments de la forme y + x où y est un élément quelconque de I.

Si deux classes latérales ont un élément en commun, elles coïncident, ce qui signifie que chaque élément de A appartient à une et une seule classe latérale de I. La somme et le produit de deux classes latérales appartiennent tous à une même classe appelée somme ou produit des deux classes. Les classes latérales de l'idéal I, par rapport à ces opérations somme et produit, constituent un anneau, que l'on appelle anneau quotient de A par rapport à l'idéal I, noté A/I. Pour qu'un idéal I soit maximal, il faut et il suffit que l'anneau-quotient A/I soit un corps.

Les morphismes sont les applications entre structures.

L'étude de toute structure algébrique comprend celle des morphismes pour cette structure.

On entend par morphisme (ou homomorphisme) une application d'un ensemble dans un autre qui conserve la "forme", c'est-à-dire est compatible avec les structures. Ainsi, il existe des morphismes entre des groupes, des anneaux, des espaces vectoriels, des algèbres, des modules ...

On généralise la définition de morphisme aux cas d'ensembles munis de structures algébriques : soient E et F, deux ensembles munis de structures algébriques (S) et (T). On suppose données : une application associant à chaque loi interne $\perp$ relative à (S) une loi interne T relative à (T) et une application associant à chaque loi externe sur E une loi externe sur F. Ces deux lois ayant même domaine d'opérateurs, les applications considérées étant bijectives. On dit alors qu'une application f de E dans F est un morphisme relativement aux structures (S) et (T) si, pour chaque loi $\perp$ sur E et pour tout couple (x, y) d'éléments de E,

$$f (x \perp y) = f (x)\ T\ f (y)$$

et si pour chaque loi externe de E, de domaine d'opérateurs $\Omega$ , et pour tout élément $(\alpha, x)$ de $\Omega$ x E,

$$f (\alpha\ x) = \alpha\ f (x)$$

Un morphisme bijectif de E sur F est un isomorphisme : les propriétés de E sont "transportées" sur F (et réciproquement).

Définissons les bases d'un espace vectoriel.

Soit E un espace vectoriel défini sur un corps commutatif K, et $(a_i)$, i = 1, . . ., n une famille de vecteurs de E. Cette famille est une base de E si elle est libre et génératrice, ce qui revient à dire que tout vecteur a de E s'écrit de manière unique :

$$a = \alpha_1\ a_1 + \alpha_2\ a_2 + \ldots + \alpha_n\ a_n \qquad \alpha_i \in K, i = 1, \ldots, n$$

La définition d'une base est étroitement liée à la notion de somme et de somme directe de sous-espaces vectoriels.

On dit que la somme $E_1 + E_2$ de deux sous-espaces vectoriels $E_1$ et $E_2$ de E est directe, et on la note $E_1 + E_2$, si, pour tout vecteur de cette somme, la décomposition de :

$$x = x_1 + x_2, x_1 \in E_1, x_2 \in E_2$$

est unique.

L'intérêt de la notion de base apparaît dans le résultat suivant :

soient E et F deux espaces vectoriels sur K, B = $(e_j)$, j = 1, . . . , n une base de E, et $(y_j)$, j = 1, 2, . . ., n une famille d'éléments de F. Il existe alors une application linéaire f de E dans F et une seule telle que, pour tout j = 1, 2, . . . , n,

$$f(e_j) = y_j$$

Si, de plus, F est muni d'une base C = $(g_i)$, i = 1, 2, . . . , k, on peut définir les vecteurs $y_j$ par leurs composantes dans la base C :

$$y_j = \sum_{i=1}^{k} \alpha_{ij} \, g_j$$

Ainsi, une application linéaire est déterminée par la donnée de la famille $\alpha_{ij}$, pour i = 1, 2, . . . , k et j = 1, 2, . . . , n.

C'est là le principe du calcul matriciel.

Définissons une algèbre sur un corps commutatif.

Cette structure algébrique, fréquemment rencontrée, est intimement liée à la notion d'espace vectoriel.

Soit K un corps commutatif. On appelle algèbre sur K un espace vectoriel E sur K muni d'une application bilinéaire de E x E dans E. Une application de E x E dans E étant ce qu'on appelle une loi de composition interne, l'ensemble E est donc muni d'une structure algébrique définie par la donnée de trois lois de composition :

-   une loi de composition interne, application de E x E dans E, notée + ;
-   une deuxième loi de composition interne, application de E x E dans E, notée (x, y) → x y ;
-   une loi de composition externe, application de K x E dans E, notée $(\alpha, x)$ → $\alpha x$.

Ces trois lois satisfaisant aux conditions suivantes :

-   muni de la première et de la troisième loi, E est un espace vectoriel sur K ;
-   pour tout triplet (x, y, z) d'éléments de E,

$$x(y + z) = x y + x z$$
$$(y + z) x = y x + z x$$

-   pour tout couple (x, y) d'éléments de E et pour tout couple $(\alpha, \beta)$ d'éléments de K,

$$(\alpha \, x)(\beta \, y) = (\alpha \, \beta)(x \, y)$$

Les définitions relatives aux espaces vectoriels s'appliquent bien entendu aux algèbres. D'autre part, certaines propriétés sont liées à la seconde loi de composition interne. Ainsi, une algèbre est commutative ou associative si la multiplication l'est ; l'algèbre est unitaire si la multiplication admet un élément neutre.

Une algèbre associative peut être considérée comme un anneau (pour les deux lois de composition interne).

Définissons les modules et algèbres sur un anneau commutatif unitaire.

On passe de la notion d'espace vectoriel à celle de module en remplaçant simplement le corps commutatif K par un anneau commutatif unitaire A. L'intérêt essentiel de cette extension est que tout anneau commutatif unitaire peut être considéré comme un module sur lui-même ; de même, tout groupe commutatif peut être considéré comme un module sur l'anneau Z des entiers rationnels. Ainsi, les méthodes de l'algèbre linéaire s'appliquent à la théorie des groupes et à celle des anneaux.

Egalement, on peut généraliser la notion d'algèbre sur un corps commutatif à celle d'algèbre définie sur un anneau commutatif unitaire.

La théorie des modules s'écarte nettement de celle des espaces vectoriels, car certains théorèmes d'existence peuvent être mis en défaut. Cela provient du fait qu'une partie réduite à un élément non nul n'est plus nécessairement libre.

On dit qu'un module est libre s'il possède au moins une base.

Il est possible de représenter tout nombre en notation résiduelle en utilisant le théorème du Reste chinois.

Soient les entiers $m_1$, $m_2$..., $m_k$, mutuellement premiers deux à deux :

$(m_i, m_j) = 1$, pour $i \neq j$.

Alors, le système de congruences linéaires :
$x \equiv x_i \bmod m_i$, pour $i = 1,2,...,k$
possède une solution unique x modulo q, donnée par :

$$x \equiv \sum_{i=1}^{k} x_i . M_i . M_i^{-1} \bmod q, \; 0 \leq x < q \qquad (1)$$

où

$$q = \prod_{i=1}^{k} m_i$$

(ce qui peut se mer sous la forme :

$$q = m_j \times \prod_{i=1, i \neq j}^{k} m_i \quad , \text{avec } j = 1,...,k$$

soit encore

$$q = m_j \times M_j \quad , \text{avec } j = 1,...,k \text{ en posant } M_j = \prod_{i=1, i \neq j}^{k} m_i \; )$$

et où $M_i^{-1}$ satisfait de façon unique (modulo $m_i$) la congruence :

$M_i . M_i^{-1} \equiv 1 \bmod m_i$, pour $i = 1, 2, ... , k$

Représentation des nombres :
Le théorème du Reste chinois ainsi formulé justifie l'existence d'une correspondance bi-univoque entre la représentation monodimensionnelle d'un nombre entier, x, et la représentation multidimensionnelle que constitue son expression résiduelle $(x_1, x_2,..., x_k)$

$x \leftrightarrow (x_1, x_2,....x_k) \bmod (m_1, m_2,..., m_k)$

Cependant la notation résiduelle est difficilement exploitaole lorsqu'il s'agit d'interpréter un nombre, ou de tester son signe, ou bien encore de le comparer à un autre nombre.

Définissons la notation positionnelle à bases mélangées.

$$x \leftrightarrow \begin{bmatrix} ...,x_3\,x_2,x_1\,x_0\,;x_{-1},x_{-2},... \\ ...,b_3,b_2,b_1,b_0\,;b_{-1},b_{-2},... \end{bmatrix}$$

$$= ... + x_3 b_2 b_1 b_0 + x_2 b_1 b_0 + x_1 b_0 + x_0 + x_{-1}/b_{-1} + x_{-2}/b_{-1}b_{-2} + ...(2)$$

$$\text{avec} : 0 \leq x_i < b_i \text{ pour tout } i$$

Cette notation s'emploie surtout lorsqu'on travaille avec des nombres entiers.
Soit par exemple :

$x = 13, y = 22$
$m_1 = 3, m_2 = 5, m_3 = 7$ et donc $q = 105$

En notation positionnelle à base 10

$X = 0.10^2 + 1.10^1 + 3.10°$
$y = 0.10^2 + 2.10^1 + 2.10°$

En notation résiduelle $(m_1, m_2, m_3)$ :

$m_1 = 3, m_2 = 5$ et $m_3 = 7$ entraîne

$$M_1 = 5.7 = 35 \text{ et } M_1^{-1} = 2 \text{ car } M_1.M_1^{-1} \equiv 1 \bmod m_1$$

$$M_2 = 3.7 = 21 \text{ et } M_2^{-1} = 1 \text{ car } M_2.M_2^{-1} \equiv 1 \bmod m_2$$

$$M_3 = 3.5 = 15 \text{ et } M_3^{-1} = 1 \text{ car } M_3.M_3^{-1} \equiv 1 \bmod m_3$$

De plus

$13 \equiv 1 \bmod 3$
$13 \equiv 3 \bmod 5$
$13 \equiv 6 \bmod 7$

D'où, par reconstruction à partir du théorème du reste chinois (relation 1)

$x = 1(35.2) + 3(21.1) + 6(15.1)$
$x = 223$
$x = 13 \bmod q = 105$

D'où

$x \leftrightarrow (1,3,6) \bmod (3,5,7)$

on trouverait de même

$y \leftrightarrow (1,2,1) \bmod 3,5,7$

En notation positionnelle à bases mélangées avec $(b_0 = m_1, b_1 = m_2$ et $b_2 = m_3)$ il vient d'après la définition (relation 2)

$$x = 13 = 0 \, (5.3.1) + 4 \, (3.1) + 1$$

D'où

$$x \leftrightarrow \begin{bmatrix} 0,4,1 \\ 7,5,3 \end{bmatrix}$$

et

$$y = 22 = 1 \, (5.3.1) + 2 \, (3.1) + 2$$

D'où

$$y \leftrightarrow \begin{bmatrix} 1,2,1 \\ 7,5,3 \end{bmatrix}$$

On peut vérifier également que cette notation est unique et ordonnée.

Ainsi, dans le dispositif selon l'invention, on convertit les nombres de la notation positionnelle à la notation résiduelle, on effectue les additions, soustractions et multiplications désirées puis on convertit les résultats en notation positionnelle ou en notation à base mélangées pour l'affichage et/ou pour leur exploitation postérieure. Il est avantageux d'effectuer un maximum d'opérations avant la conversion pour limiter le nombre de conversions nécessaire pour effectuer un calcul donné.

La propriété remarquable de la notation résiduelle vient de ce que les opérations d'addition et de multiplication s'effectuent indépendamment sur chaque chiffre (résidu).

$$\text{Soient } (m_1, m_2, \ldots m_k), \ (m_i, m_j) = 1 \ \forall \ i \neq j, \ q = \prod_{i=1}^{k} m_i$$

Soient x, y pour lesquels nous adoptons la notation résiduelle suivante :

$$x = \begin{bmatrix} x_1 \ , \ x_2 \ , \ldots, \ x_k \\ M_1 M_1^{-1}, \ M_2 M_2^{-1}, \ \ldots, \ M_k M_k^{-1} \end{bmatrix} \bmod (m_1, m_2, \ldots, m_k)$$

$$y = \begin{bmatrix} y_1 \ , \ y_2 \ , \ldots, \ y_k \\ M_1 M_1^{-1}, \ M_2 M_2^{-1}, \ \ldots, \ M_k M_k^{-1} \end{bmatrix} \bmod (m_1, m_2, \ldots, m_k)$$

$$x = x_1 M M_1^{-1} + x_2 M_2 M_2^{-1} + \ldots + x_k M_k M_k^{-1}$$

$x_1$ étant le résidu modulo $m_1$, $x_2$ étant le résidu modulo $m_2$ et $x_k$ étant le résidu modulo $m_k$.

$$x + y = x_1 M_1 M_1^{-1} + x_2 M_2 M_2^{-1} + \ldots + x_k M_k M_k^{-1} + y_1 M_1 M_1^{-1}$$
$$+ y_2 M_2 M_2^{-1}$$

$$+ \ldots + y_k M_k M_k^{-1}$$

$$x + y = (x_1 + y_1) M_1 M_1^{-1} + (x_2 + y_2) M_2 M_2^{-1} + \ldots + (x_k + y_k) M_k M_k^{-1}$$

Mais on peut écrire, pour tout i :

$x_i + y_i = z_i + r_i . m_i$ (soit $x_i + y_i \equiv z_i \bmod m_i$)

Et donc :

$$x + y = z_1 M_1 M_1^{-1} + z_2 M_2 M_2^{-1} + \ldots + z_k M_k M_k^{-1} + q \sum_{i=1}^{k} r_i M_i^{-1}$$

puisque, par définition, $q = m_i , M_i$

$$z = x + y = \begin{bmatrix} z_1 , z_2 , \ldots, z_k \\ M_1 M_1^{-1}, M_2 M_2^{-1}, \ldots, M_k M_k^{-1} \end{bmatrix} \bmod (m_1, m_2, \ldots, m_k)$$

où $\quad z_i \equiv x_i + y_i \bmod m_i$, pour $i = 1, 2, \ldots, k$

Donc $\begin{cases} z = x + y \equiv z_1 M_1 M_1^{-1} + \ldots + z_k M_k M_k^{-1} \bmod q \\ \text{avec} \quad z_i \quad x_i + y_i \bmod m_i, \text{ pour } i = 1, 2, \ldots, k \end{cases}$

De même :

$$t = x . y = (\sum_i x_i M_i M_i^{-1}) . (\sum_j y_j M_j M_j^{-1})$$

$$t = x . y = \sum_i x_i y_i M_i M_i M_i^{-1} M_i^{-1} + \sum_{\substack{i,j \\ i \neq j}} x_i y_j M_i M_j M_i^{-1} M_j^{-1}$$

10

Mais :

$$M_iM_j \quad = \frac{\prod_i m_i}{m_i} \qquad \frac{\prod_j m_j}{m_j}$$

$$= \frac{\prod_i m_i \cdot q}{m_i m_j} \qquad\qquad \text{pour } i \neq j$$

$$= K \cdot q \qquad\qquad \text{pour } i \neq j$$

où K est une constante.
Et donc :

$$t = x \cdot y = \sum_i x_i y_i \; M_i M_i M_i^{-1} \quad M_i^{-1} + K'q$$

où $K'$ est une constante.
D'autre part, on peut écrire :

$M_i M_i^{-1} = \beta_i \cdot m_i + 1$, puisque $M_i \cdot M_i^{-1} \equiv 1 \bmod m_i$ par définition.

Alors,

$$t = x \cdot y = \sum_i x_i y_i \; (\beta_i m_i + 1) \; M_i M_i^{-1} + K'q$$

$$t = x \cdot y = \sum_i x_i y_i M_i M_i^{-1} + \sum_i x_i y_i \, \beta_i m_i M_i M_i^{-1} + K'q$$

et comme $q = m_i \cdot M_i$, on obtient :

$$t = x \cdot y = \sum_i x_i y_i M_i M_i^{-1} + K''q$$

où $K''$ est une constante

$$t = x \cdot y = \sum \begin{bmatrix} t_1 \; , \; t_2 \; , \ldots, \; t_k \\ M_1 M_1^{-1} \, , \, M_2 M_2^{-1} \, , \ldots, \, M_k M_k^{-1} \end{bmatrix} \bmod (m_1, m_2, \ldots, m_k)$$

$$\text{où} \qquad t_i \equiv x_i \cdot y_i \quad \bmod m_i, \text{ pour } i = 1, 2, \ldots, k$$

(notons que l'unicité implique $0 \leq x, y, z, t < q$)

$t = x \cdot y \equiv t_1 M_1 M_1^{-1} + t_2 M_2 M_2^{-1} + \ldots + t_k M_k M_k^{-1} \bmod q$

Donc

avec $t_i \equiv x_i . y_i \bmod m_i$, pour $i = 1, 2, \ldots, k$

On remarque qu'il n'y a pas de retenue en arithmétique résiduelle, ce qui constitue le contraste majeur avec l'arithmétique positionnelle classique. En effet, on sait bien que, dans cette dernière représentation les opérations d'addition et de multiplication ne peuvent pas s'effectuer séparément sur chaque digit (chiffre), puisqu'une information importante, la retenue, doit être transmise de digit en digit, du poids faible vers le poids fort.

Avantageusement, on définit une arithmétique complexe sur un anneau. Dans ce cas, en plus de l'indépendance de sommes sur chaque résidu, les calculs sont simplifiés par le fait qu'une multiplication complexe se ramène à une addition d'indice, c'est-à-dire de deux nombres entiers.

Jusqu'ici nous sommes restés au niveau élémentaire des opérations, en bâtissant des arithmétiques appropriées à la façon dont on représente les nombres. Nous allons maintenant employer le langage algébrique, et quitter le niveau de l'opération pour nous préoccuper de relations structurelles, entre des ensembles de nombres munis de lois de composition comme l'addition et la multiplication.

Soient $R_1, R_2, \ldots, R_k$ des anneaux commutatifs unitaires.

La somme directe (aussi appelée produit cartésien) de $R_1, \ldots, R_k$ notée :

$$R = \bigoplus_{i=1}^{k} R_i$$

est l'ensemble des k-uplets :

$$\bigoplus_{i=1}^{k} R_i = \left\{ (r_1, r_2, \ldots, r_k), r_i \in R_i \right\}$$

R constitue un anneau commutatif unitaire pour les opérations d'addition et de multiplication composante à composante.

Soit R un anneau fini, commutatif et unitaire.

Alors R admet une décomposition unique en somme directe d'anneaux locaux.

Un anneau local est un anneau commutatif unitaire qui a un (et un seul) idéal maximal M. Dans un anneau fini local, M contient tous les éléments diviseurs de zéro et l'élément zéro.

La décomposition en anneaux locaux est basée sur le théorème du Reste chinois, que nous pouvons formuler ainsi :

Soit Y un anneau commutatif unitaire, et soit A un idéal de Y factorisable en un produit d'idéaux premiers entre eux :

$A = A_1 A_2 \ldots A_k, A_i + A_j = Y$ pour $i \neq j$

alors l'anneau quotient Y/A est isomorphe à la somme directe d'anneaux locaux :
Y/A Y/A$_1$ $\oplus$ Y/A$_2$ $\oplus$ $\ldots$ $\oplus$ Y/A$_k$

L'anneau des classes résiduelles d'entiers modulo q, R (q), est décomposable en la somme directe :

$$R(q) \approx \bigoplus_{i=1}^{k} R(m_i)$$

12

où $(m_i, m_j) = 1$, pour $i \neq j$ et

$$q = \prod_{i=1}^{k} m_i$$

La décomposition d'un anneau R en anneaux finis locaux intervient aussi naturellement lorsque R est l'image homomorphique d'un anneau Y par rapport à un idéal factorisable en un produit d'idéaux maximaux : c'est le cas en particulier lorsque Y est l'anneau des entiers d'un corps de nombres algébriques.

Un anneau de Dedekind a la propriété que tout idéal est factorisable en produit d'idéaux maximaux, et en fait tout idéal premier non nul est maximal (l'anneau est noethérien) : l'anneau des entiers d'un corps de nombres algébriques est un anneau de Dedekind et noethérien.

Soient k entiers $m_1, m_2, \ldots, m_k$ pour lesquels $(-1)$ est un non-résidu quadratique.

Posons

$$q = \prod_{i=1}^{k} m_i,$$

et soit R (q) l'anneau commutatif unitaire des entiers modulo q.

Alors $(-1)$ est un non-résidu quadratique de q.

Soit $\hat{\imath}$ une solution de $x^2 \equiv -1$ trouvée dans R $(q^2)$, où :

R $(q^2) = \{(a + \hat{\imath}b),$ a et b R (q))$\}$

Définissons les opérations d'addition et de multiplication dans R $(q^2)$ par :

$(a + \hat{\imath}b) + (c + \hat{\imath}d) = (a + c) \bmod q + \hat{\imath}(b + d) \bmod q$
$(a + \hat{\imath}b) . (c + \hat{\imath}d) = (ac - bd) \bmod q + \hat{\imath}(ad + bc) \bmod q$

L'ensemble R $(q^2)$ est constitué d'entiers de Gauss semblable aux nombres complexes ordinaires, avec $\hat{\imath}^2 = -1$.

Alors, R $(q^2)$ est un anneau fini commutatif et unitaire.

Soient k entiers premiers $m_1, m_2, \ldots m_k$ tels que $(-1)$ est un non-résidu quadratique de chacun, et posons :

$$q = \prod_{i=1}^{k} m_i$$

Soit R $(q^2) = \{a + \hat{\imath}b, 0 \leq a, b < q\}$ l'anneau défini précédemment.

Alors, la somme directe des corps de Galois :

S $(q^2)$ = GF $(m_1{}^2)$ $\oplus$ GF $(m_2{}^2)$ $\oplus$ ... + GF $(m_k{}^2)$
S $(q^2)$ = $\{(\alpha_1, \alpha_2, \ldots, \alpha_k), \alpha_i \in$GF $(m_i{}^2), i = 1, 2, \ldots, k\}$

où l'on définit les opérations d'addition et de multiplication par :

$(\alpha_1, \alpha_2, \ldots, \alpha_k) + (\beta_1, \beta_2, \ldots, \beta_k) = (\alpha_1 + \beta_1, \alpha_2 + \beta_2, \ldots, \alpha_k + \beta_k)$
$(\alpha_1, \alpha_2, \ldots, \alpha_k) . (\beta_1, \beta_2, \ldots, \beta_k) = (\alpha_1 . \beta_1, \alpha_2 . \beta_2, \ldots, \alpha_k . \beta_k)$

est un anneau de $q^2$ éléments, isomorphe à l'anneau R $(q^2)$.

Tout corps de Galois GF $(m_i{}^n)$ possède des éléments générateurs g qui engendrent tous les éléments du corps sauf l'élément zéro, par les opérations successives de la multiplication :

g · g, g · g · g, . . .

L'ensemble { 0, 1, 2, . . ., $m_i^2 - 2$} muni de l'addition modulo ($m_i^2 - 1$) est un groupe abélien, isomorphe au groupe cyclique [GF ($m_i^2$) -{ o + îo}] engendré par g avec la loi multiplicative.

Nous voyons ainsi qu'un choix judicieux du nombre entier q permet de bâtir sur l'anneau R (q) des structures algébriques diverses, dotées de propriétés fort intéressantes, transposables par isomorphisme :

- l'anneau R ($q^2$), considéré comme un algèbre définie sur R (q) (ou comme un module sur R (q)), possède une base orthogonale permettant de travailler composante à composante sur les éléments de R ($q^2$) exprimés dans cette base canonique.

Grâce à l'isomorphisme entre le groupe d'indices et le groupe cyclique des corps de Galois GF ($m_i^2$), on dispose d'un moyen remarquablement simple pour effectuer une multiplication complexe en une seule opération d'addition réelle sur les indices des éléments ;

- l'anneau R (q), considéré comme une algèbre (ou un module) sur lui-même, possède également une base orthogonale. Par conséquent les éléments de R (q), qui sont aussi les composantes réelle et imaginaire des entiers complexes de R ($q^2$), sont décomposables dans cette base, et peuvent être travaillés séparément par composante.

Dans une algèbre définie sur un corps (ou un espace vectoriel sur un corps), les bases associées ont toutes la même dimension. Ceci n'est plus vrai avec une algèbre (ou un module) définie sur un anneau. Un module est libre s'il possède une base. Dans le cas de R (q) et de R ($q^2$), il existe au moins une base (interprétation algébrique du théorème du Reste chinois). En particulier, pour R (q), la formulation classique du théorème donne la base canonique orthogonale ($b_i = M_i M_i^{-1}$). En effet :

$$b_1 = M_1 M_1^{-1} \equiv (1, 0, 0, \ldots, 0) \bmod (m_1, m_2, \ldots, m_k)$$

$$b_2 = M_2 M_2^{-1} \equiv (0, 1, 0, \ldots, 0) \bmod (m_1, m_2, \ldots, m_k)$$

$$\cdot$$
$$\cdot$$
$$\cdot$$

$$b_k = M_k M_k^{-1} \equiv (0, 0, 0, \ldots, 1) \bmod (m_1, m_2 \ldots, m_k)$$

Les notations positionnelles (en base b ou en bases mélangées) définissent d'autres bases, qui n'ont pas forcément la "dimension" k.

Un problème de traitement sur des données complexes, où les parties réelles et imaginaires sont notées en base non orthogonale (notation positionnelle binaire pour le calculateur, notation décimale pour l'homme) est classiquement effectué sans changer de base (on reste en notation positionnelle). D'où l'emploi obligé d'une arithmétique lourde, avec propagation de retenue.

L'arithmétique résiduelle complexe proposée consiste donc à transposer le problème dans une base orthogonale (notation résiduelle) pour profiter de l'arithmétique "orthogonale", on va même plus loin que cela en réduisant l'opération de multiplication complexe à une opération d'addition d'indices. Dès lors qu'il s'agit d'apprécier l'amplitude d'un résultat, ou de comparer des résultats, on change à nouveau de base pour revenir à une notation positionnelle (celle à bases mélangées de préférence, puisqu'elle a même dimension que la notation résiduelle). En final, on effectue une transcription supplémentaire en notation binaire, si cela s'avère nécessaire.

Pour construire une arithmétique complexe sur un anneau il faut choisir pour éléments de la base résiduelle les nombres $m_i$ pour lesquels le nombre -1 est un non résidu quadratique. Les nombres sont donnés par la formule :

$m_i = 4k + 3$ où k est un entier.

Sur la figure 1, on peut voir un premier exemple de réalisation d'un calculateur 7 selon l'invention. Le calculateur 7 comporte un module de codage 21, un module de calcul 1 et un module de décodage 22.

Le module de codage 21 est connecté à au moins un bus de données 33 et/ou 34. Le module de codage 21 est relié au module de calcul 1 par au moins un bus de données 35 et/ou 36. Le module de calcul 1 est relié au module de décodage 22 par un bus de données 33. Le module de décodage 22 est relié à un bus de données 39.

Le module de codage 21 reçoit successivement par un seul bus ou simultanément par les deux bus 33 et 34 deux données numériques en notation positionnelle.

Le module de codage 21 transforme les données numériques de la notation positionnelle en notation résiduelle. Par exemple, les données numériques sont reçues en binaire par le module de codage 21 et sont codées en notation résiduelle dont les chiffres sont codés en binaire, pour des raisons technologiques.

Le module de calcul 1 reçoit successivement par un seul bus ou simultanément par les deux bus 35 et 36 deux données numériques en notation résiduelle. Le module de calcul 1 effectue sur les deux données le calcul pour lequel il a été prévu, par exemple l'addition, la soustraction ou la multiplication. Dans une variante de réalisation, la soustraction d'un nombre est remplacée par l'addition de son opposé.

Le module de décodage 22 reçoit par le bus 33 le résultat de calcul effectué par le module de calcul 1. Ce résultat est reçu en notation résiduelle. Le module de décodage 22 transforme ce résultat de calcul en notation résiduelle en une notation plus facilement exploitable comme par exemple la notation à base mélangée, la notation binaire, la notation héxadécimale ou la notation décimale.

Le résultat rendu facilement exploitable est émis sur le bus 39.

Avantageusement, le module de calcul est relié à un bus de commande 37. Dans ce cas, un même module de calcul 1 permet, selon la commande qu'il reçoit sur le bus 37 d'effectuer une addition, une soustraction, ou une multiplication, ou même une division dans le cas où cette opération est possible en notation résiduelle.

Avantageusement, le dispositif de calcul 7 est un dispositif pipeline. Au $k^{ième}$ cycle d'horloge, le module de codage 21 effectue la transformation de deux données d'ordre k de la notation positionnelle en notation résiduelle, le module de calcul 1 effectue une opération, par exemple l'addition sur deux données numériques d'ordre k-1 tandis que le module de décodage 22 assure la transformation du résultat d'ordre k-2 de la notation résiduelle en notation positionnelle.

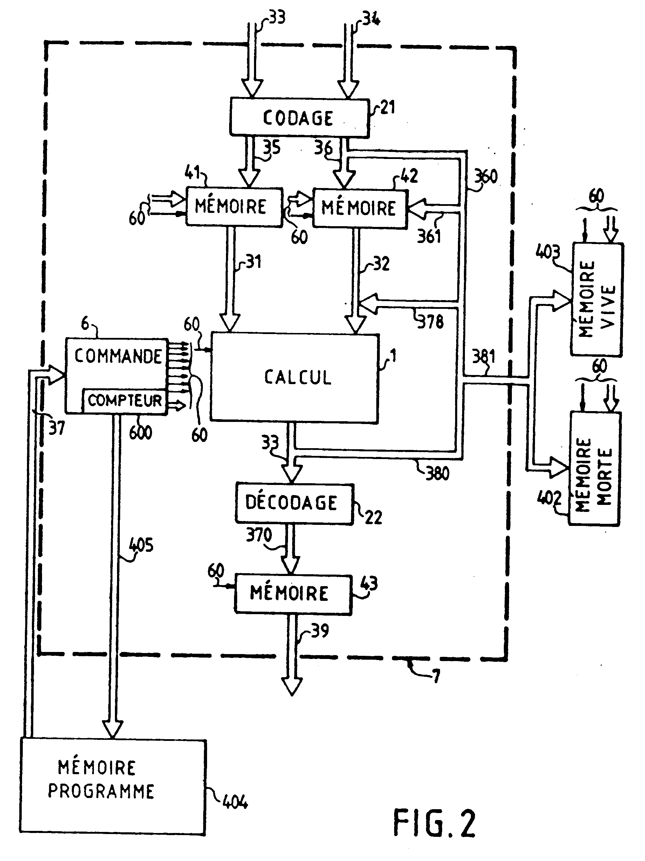

Sur la figure 2, on peut voir un exemple de réalisation du dispositif de calcul selon l'invention particulièrement performant. Ce dispositif est particulièrement bien adapte aux calculs complexes, aux enchaînements de calculs ainsi qu'aux calculs utilisant de façon répétée les mêmes données. On utilise ce type de calculs notamment en filtrage numérique.

Le dispositif de calcul de la figure 2 comporte, en plus du module de codage 21, du module de calcul 1 et du module de décodage 22 un module de commande 6.

Le module de commande 6 permet l'exécution successive de plusieurs calculs utilisant par exemple plusieurs fois la même donnée numérique en notation résiduelle ou l'utilisation du résultat d'un calcul comme une donnée d'un des calculs suivants.

Le dispositif de calcul 7 selon l'invention comporte des moyens 41, 42, 382, 402, 403 permettant de fournir plusieurs fois une même donnée au module de calcul 1 sans qu'il soit nécessaire d'effectuer plusieurs fois le passage de la notation positionnelle à la notation résiduelle.

Le dispositif de calcul selon l'invention comporte, par exemple deux mémoires 41 et 42 connectées entre le module de codage 21 et le module de calcul 1.

Par exemple, la mémoire 41 reçoit des données du module de codage 21 par un bus 35 et envoie des données au module de calcul 1 par un bus 31.

Par exemple, la mémoire 42 reçoit les données du module de codage 21 par un bus 36 et envoie des données au module de calcul 1 par un bus 32.

Avantageusement, les résultats de calcul du module de calcul 1 sont susceptibles d'être fournis à l'entrée dudit module de calcul 1, par exemple par l'intermédiaire d'un bus 380, d'un bus 378 et d'un bus 32.

Avantageusement, les résultats de calcul du module de calcul 1 sont susceptibles d'être fournis à l'entrée de l'une des mémoires 41, 42 par exemple par l'intermédiaire du bus 380, d'un bus 360 et du bus 36.

Avantageusement, les résultats de calcul du module de calcul 1 sont susceptibles d'être fournis à une mémoire vive 403, par exemple externe au dispositif de calcul 7 par exemple par l'intermédiaire du bus 33, du bus 380 et d'un bus 381.

Avantageusement, les données numériques en notation résiduelle sont susceptibles d'être fournies au module de calcul 1 par exemple, par l'intermédiaire d'un bus 381, du bus 378 et du bus 32 à partir d'une mémoire morte 402 ou de la mémoire vive 403.

Dans un exemple de réalisation du dispositif selon l'invention, la mémoire morte 402 est externe au dispositif de calcul 7.

Dans un second exemple de réalisation la mémoire morte 403 incluse dans le dispositif de calcul 7 est une mémoire morte programmable (PROM, EPROM ou EEPROM en terminologie anglo-saxonne).

Avantageusement les données numériques en notation résiduelle sont susceptibles d'être fournies à l'une des mémoires 41 ou 42 par la mémoire vive 402 et/ou la mémoire morte 403 par exemple par l'intermédiaire du bus 381, du bus 360 et du bus 36.

Avantageusement, les données numériques sont susceptibles d'être fournies par le module de codage 21 à la mémoire vive 43, par exemple, par l'intermédiaire du bus 36, du bus 360, et du bus 381.

Bien entendu, aucune combinaison de chemins de données énoncés ci-dessus ne sort du cadre de la présente invention.

Dans un premier exemple de réalisation les mémoires 41 et 42 sont des mémoires tampons susceptibles de stocker, chacune une donnée numérique en notation résiduelle. Chaque nouvelle donnée efface l'ancienne.

Dans un second exemple de réalisation du dispositif selon l'invention, les mémoires 41 et/ou 42 sont des registres à décalage susceptibles de stocker n données simultanément. A chaque signal de commande 60 les valeurs numériques stockées sont décalées d'un rang la valeur numérique de rang n étant émise sur le bus 31 ou 32.

Avantageusement, sur commande 60 émise par le module de commande 6 une valeur numérique est susceptible d'être stockée par l'intermédiaire du bus 361 dans un quelconque des registres à décalage 41 et/ou 42. Si par exemple, on désire disposer à l'une des entrées du module de calcul 1 d'une valeur numérique dans deux cycle de calcul, on stocke ladite valeur numérique dans le registre d'indice n-2 de la mémoire 41 ou 42 connecté à ladite entrée du module de calcul 1.

Dans un troisième exemple de réalisation du dispositif selon l'invention les mémoires 41 et/ou 42 sont des mémoires vives (RAM en terminologie anglo-saxonne). Le module de commande 6 assure la commande et l'adressage des mémoires 41 et 42.

Avantageusement, le module de décodage 22 est connecté à une mémoire tampon 43 par l'intermédiaire d'un bus 370. La mémoire tampon 43 permet de fournir les résultats de calcul par l'intermédiaire d'un bus 39.

La mémoire morte 402 permet de stocker des coefficients dont on est susceptible de se servir durant les calculs. Les coefficients sont convertis en notation résiduelle une seule fois, avant la programmation de la mémoire 402.

La mémoire vive 403 permet de stocker, des résultats intermédiaires et/ou des données dont on est susceptible de se servir plusieurs fois, en notation résiduelle. De plus, quand le module de codage 21 est libre, il est possible de stocker dans la mémoire 403, en notation résiduelle, au fur et à mesure de leur disponibilité des valeurs numériques provenant, par exemple, d'un dispositif d'acquisition de données (non représenté) connecté, par exemple, sur le bus 34.

Avantageusement, une mémoire 404 est connectée par l'intermédiaire d'un bus 37 au module de commande 6. La mémoire 404 est susceptible de stocker les instructions du programme permettant de faire exécuter au dispositif 7 les calculs désirés. Les instructions stockées dans la mémoire 404 permettent au module de commande 6 d'aiguiller les circulations de données, d'activer, en lecture ou en écriture et de fournir une adresse aux mémoires 41, 42, 402 et 403 et de commander l'opération qui doit être exécutée par le module de calcul 1.

La mémoire 404 est, par exemple, adressée par un compteur 600 par l'intermédiaire d'un bus 405. Le compteur 600 est par exemple inclus dans le module de commande 6.

L'architecture du module de commande 6 est adaptée aux calculs que l'on veut pouvoir traiter avec le dispositif 7 et aux modules 1, 21 et 22 utilisés ainsi qu'aux mémoires 41, 42, 402 et 403.

Le module de commande est réalisé de manière connue. Par exemple, il comporte des séquenceurs. Ces séquenceurs sont réalisés, par exemple sous forme de logique programmable (PLD ou EPLD en terminologie anglo-saxonne), ou microprogrammée.

Avantageusement, les instructions du programme stocké en mémoire 404 sont obtenues à partir d'un assembleur ou d'un compilateur approprié réalisé de manière connue.

Pour la clarté des figures, les connexions de commande 60 n'ont pas été représentées.

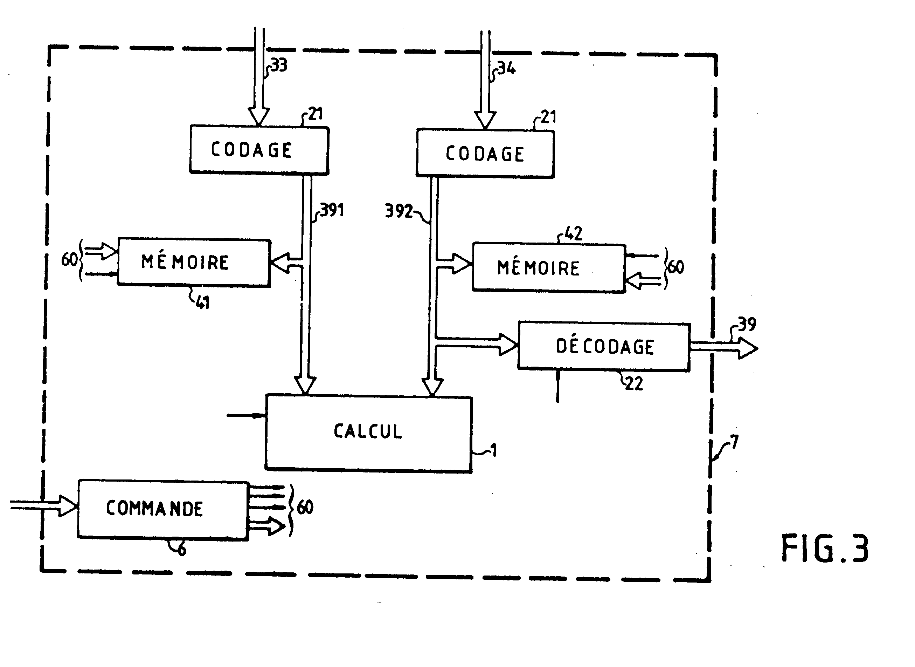

Sur la figure 3, on peut voir une variante de réalisation du dispositif de calcul 7. La variante de réalisation illustrée sur la figure 3 comporte des chemins de données simplifiés.

Sur la figure 3, le module de codage 21 est représenté sous forme de deux dispositifs 21 chargés respectivement de la transformation des données numériques en notation positionnelle en données numériques en notation résiduelle sur les bus 33 et 34.

Le premier des deux dispositifs de codage 21 est relié par un bus 391 à la mémoire 41 et à une première entrée du module de calcul 1.

Le second de deux dispositifs de codage 21 est relié par un bus 392 à la mémoire 42, au module de décodage 22 et à une seconde entrée du module de calcul 1.

Le bus 391 permet au premier dispositif de codage 21 de fournir des données au module de calcul 1 et/ou à la mémoire 41 ainsi que des échanges bidirectionnels de données entre la mémoire 41 et le module de calcul 1.

Le bus 392 permet au second dispositif de codage 21 de fournir des données au module de calcul 1 et/ou à la mémoire 42, des échanges bidirectionnels de données entre la mémoire 42 et le module de calcul 1 ainsi que la transmission de résultats du module de calcul 1 vers le module de décodage 22.

Le module de commande 6 supervise les échanges de données et les opérations exécutées par le module de calcul 1.

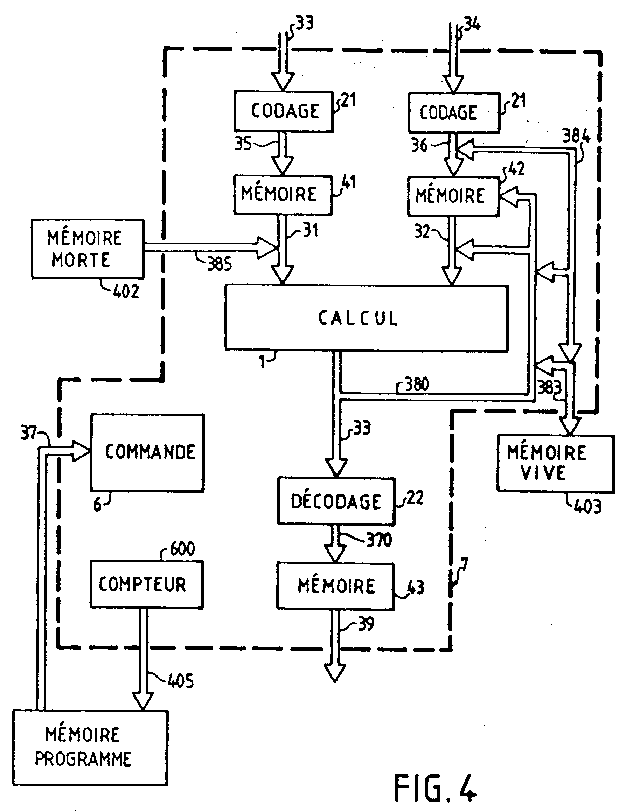

Sur la figure 4, on peut voir un exemple de réalisation du dispositif de calcul 7 particulièrement performant en ce qui concerne les échanges de données.

Un premier dispositif de codage 21 est susceptible de recevoir par le bus 33 un premier flot de données à traiter. Le premier dispositif 21 est relié par le bus 35 à la mémoire 41. La mémoire 41 est reliée par un bus 31 à une première entrée du module de calcul 1. Sur le bus 31 est connectée, par l'intermédiaire d'un bus 385 une mémoire morte 402. Un second dispositif de codage 21 est susceptible de recevoir par le bus 34 un second flot de données à traiter.

Le second dispositif de codage 21 est relié par un bus 36 à la mémoire 42. La mémoire 42 est reliée par un bus 32 à une seconde entrée du module de calcul 1. La sortie du module de calcul 1 est reliée par le bus 33 au module de décodage 22. Le module de décodage 22. Le module de décodage 22 est relié par le bus 370 à la mémoire tampon 43. La mémoire tampon 43 est connectée à un bus 39.

Un bus 380 relie le bus 33 au bus 32 et à la mémoire 42.

Un bus 383 relie bidirectionnelement une mémoire vive 403 au bus 380.

Un bus 384 relie le bus 36 au bus 380 et au bus 383.

Le dispositif de calcul 7 illustré sur la figure 4 permet les échanges simultanés des données notamment entre :

- la sortie du module de calcul 1 et la seconde entrée du module de calcul 1 par les bus 33, 380 et 32 et entre le dispositif de codage 21 et la mémoire vive 403 par l'intermédiaire des bus 36, 384 et 383 ;
- la sortie du module de calcul 1 et la seconde entrée du module de calcul 1 par les bus 33, 380 et 32 et entre le dispositif de codage 21 et la mémoire 42 par l'intermédiaire du bus 36 ;
- la sortie du module de calcul 1 et la seconde entrée du module de calcul 1 par les bus 33, 380 et 32 et entre la mémoire vive 403 et la mémoire 42 par l'intermédiaire des bus 383, 384 et 36 ;
- la sortie du module de calcul 1 et le module de décodage 22 et les divers échanges entre les dispositifs de codage 21, la mémoire 42 et la mémoire 403.

Les possibilités d'échange des données supervisées par le module de commande 6 permettent d'une part d'utiliser un dispositif de codage 21 pour transformer au fur et à mesure de leur disponibilité des données numériques en notation positionnelle provenant par exemple d'un dispositif d'acquisition de données par le bus 34, en données numériques en notation résiduelle et leur stockage dans la mémoire vive 403, d'autre part, de faire exécuter par le dispositif de calcul 7 directement des calculs complexes très utiles en filtrage numérique comme par exemple en calcul de convolution, les calculs de corrélation ou les calculs de pondération. Les calculs sont supervisés par le module de 6 en exécutant un programme adéquat stocké dans la mémoire de programme 404.

Dans une variante de réalisation du dispositif selon l'invention, non représentée, le dispositif de calcul comporte des moyens de transcodage de la notation résiduelle en notation à bases mélangées (et vice versa) ainsi que des comparateurs. Le transcodage en base mélangée (et vice versa) est plus facile que le transcodage entre la notation résiduelle et la notation positionnelle. En effet, lors d'un transcodage dans la notation à bases mélangées on conserve la dimension de l'espace utilisé. La notation à bases mélangées permet la comparaison. On peut ainsi au cours d'un calcul vérifier si un nombre est plus grand qu'un autre nombre ou s'il est plus petit qu'un seuil donné. Pour la suite des calculs le nombre testé est transcodé en notation résiduelle.

Avantageusement, le nombre testé a été stocké dans une mémoire vive avant son transcodage. Dans la suite des calculs on utilise la valeur qui a été stockée.

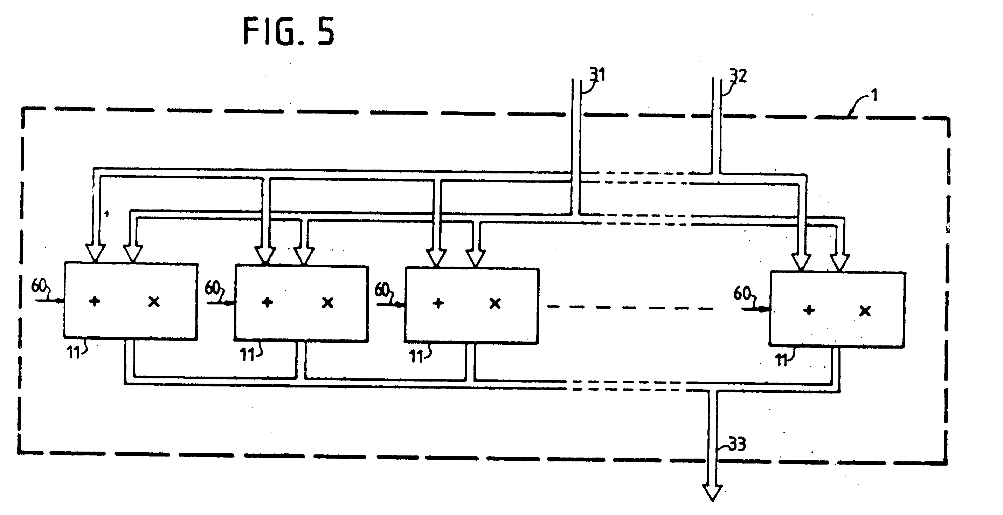

Sur la figure 5, on peut voir un exemple de réalisation du module de calcul 1 des figures 1 à 4. Le module de calcul 1 utilise le fait que, dans une arithmétique résiduelle il est possible d'effectuer les calculs indépendamment sur chaque chiffre, sans propagation de retenue. Ainsi, le module de calcul 1 comporte une pluralité de calculateurs élémentaires 11 susceptible d'effectuer un calcul sur un chiffre en notation résiduelle.

Le module de calcul 1 est connecté à deux bus 31 et 32. A l'intérieur du module de calcul 1, chacun desdits bus se partage afin de fournir à chaque calculateur élémentaire 11 le chiffre désiré. Chaque calculateur élémentaire 11 reçoit deux chiffres.

Dans un premier exemple de réalisation, du dispositif selon l'invention, chaque calculateur élémentaire 11 est susceptible d'effectuer un seul type d'opération, par exemple la multiplication.

Avantageusement, les calculateurs élémentaires 11 sont susceptibles d'effectuer l'opération désirée, sur commande 60 reçue du module de commande 6. Par exemple les calculateurs élémentaires 11 sont susceptibles d'effectuer, sur commande une addition, une soustraction ou une multiplication.

Chaque calculateur élémentaire 11 fournit au bus 33 le résultat du calcul effectué.

Dans une variante de réalisation, les calculateurs élémentaires 11 comportent des logiques combinatoires susceptibles d'effectuer les calculs désirés.

Avantageusement, dans la mesure où l'on effectue les calculs indépendamment sur chaque chiffre les résultats de chaque opération sont tabulés. On peut, dans l'arithmétique résiduelle obtenir une bonne dynamique (sur chaque chiffre) tout en utilisant des mémoires mortes de capacité courante, par exemple des mémoire ROM de 14 bits d'adresse.

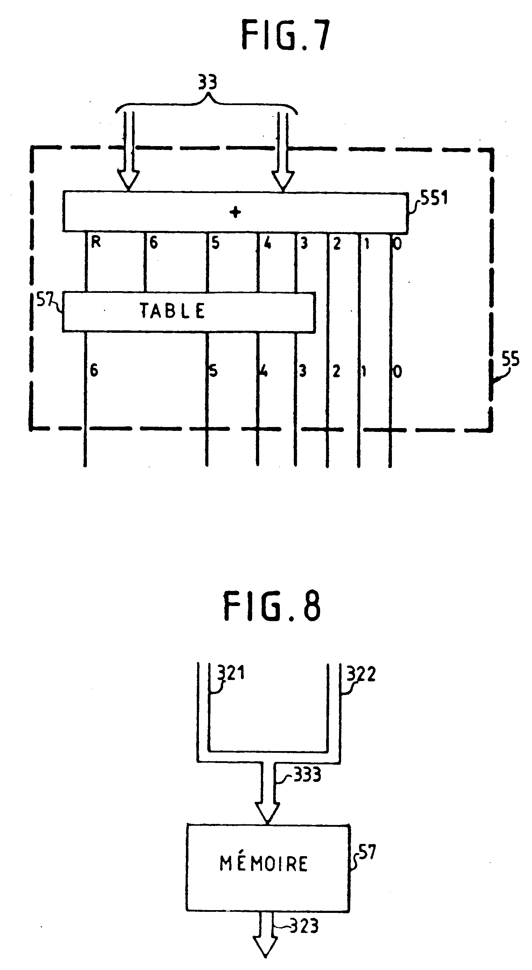

Un exemple de calculateur élémentaire 11 utilisant des fonctions tabulées est utilisé sur la figure 5, le principe du calcul utilisant des tables stockées en mémoire morte étant illustré sur la figure 8.

Chaque calculateur élémentaire 11 effectue les calculs séparément sur un chiffre.

Le module de calcul 1 comporte un nombre de calculateurs élémentaires 11 suffisant pour pouvoir traiter tous les chiffres des nombres les plus grands sur lesquels on veut pouvoir effectuer des calculs.

Le tableau I donne un exemple de module de calcul I comportant seize processeurs élémentaires. Ces seize processeurs élémentaires peuvent être réalisés en utilisant des mémoires ROM de quatorze bits d'adresse. Les nombres $m_i$ du tableau I sont de la forme $m_i = 4k + 3$ où k est un entier positif.

Il est bien entendu qu'un module de calcul 1 comportant un nombre de calculateurs élémentaires 11 supérieur ne sort pas du cadre de la présente invention.

## TABLEAU I

| $m_i$ | Nombre d'éléments de GF ($m_i^2$) | Nombre de bits pour coder GF ($m_i^2$) |
|---|---|---|
| 3 | 9 | 4 |
| 7 | 49 | 6 |
| 11 | 121 | 8 |
| 19 | 361 | 10 |
| 23 | 529 | 10 |
| 31 | 961 | 10 |
| 43 | 1849 | 12 |
| 47 | 2209 | 12 |
| 59 | 3481 | 12 |
| 67 | 4489 | 14 |
| 71 | 5041 | 14 |
| 79 | 6241 | 14 |
| 83 | 6889 | 14 |
| 103 | 10609 | 14 |
| 107 | 11449 | 14 |
| 127 | 16129 | 14 |

Suivant la dynamique du problème considéré, on choisira un modulus approprié :

$$q = \prod_{i=1}^{k} m_1$$

Pour garantir l'unicité du résultat, chacune des composantes de celui-ci doit être inférieure à q, ce qui impose des contraintes sur la dynamique des données.

18

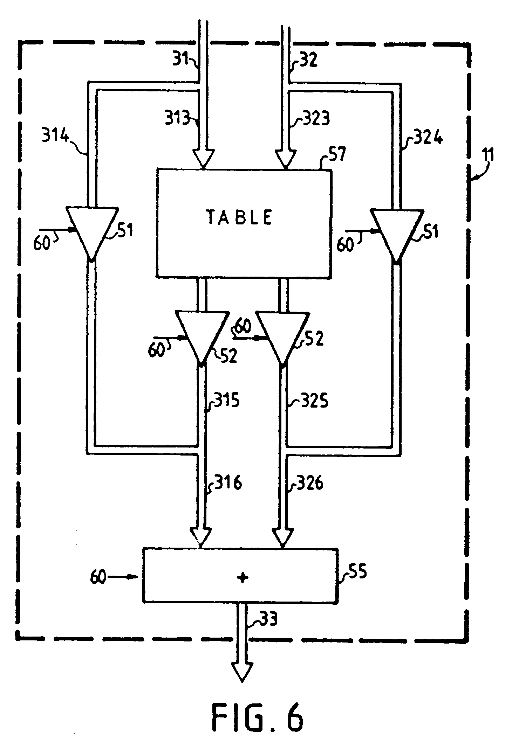

Sur la figure 6, on peut voir un exemple de réalisation d'un calculateur élémentaire 11 susceptible d'effectuer sur commande 60 du module de commande 6 une multiplication, une addition ou une soustraction.

Une multiplication consiste en une association à chaque chiffre d'un indice d'ordre dans le groupe GF $(m_i^2)$ et en une sommation des indices obtenus.

Pour obtenir le résultat d'une multiplication il suffit alors de convertir l'indice au nombre qui lui est associé.

Avantageusement, l'association d'indice est tabulée dans une mémoire morte 57.

L'additionneur est un additionneur modulo $m_i^2 - 1$.

Avantageusement, on utilise un même additionneur 55 pour effectuer l'opération "addition" et pour additionner les indices lors d'une multiplication.

Avantageusement, l'addition est tabulée dans une mémoire morte 55.

Toutefois, quand on effectue l'addition modulo $m_i^2 - 1$ il est important de retrancher $m_i^2 - 1$ du résultat tant que celui-ci est supérieur ou égal à $m_i^2 - 1$.

L'exemple de l'addition modulo 8 est donné par le tableau III.

Un exemple d'additionneur modulo

$$m_{i=3}^{2}$$

- 1 c'est-à-dire $11^2 - 1 = 120$ est illustré sur la figure 7.

Avantageusement, les bus 31, 313, 314, 315, 316, 32, 323, 324, 325, 326 et 33 sont susceptibles de transmettre en parallèle les deux composants, réel et imaginaire d'un chiffre.

Le bus 31 est connecté d'une part à un bus 313 et d'autre part à un bus 314.

Le bus 32 est connecté d'une part à un bus 323 et d'autre part à un bus 324.

Les bus 313 et 323 constituent les bus d'adresse d'une mémoire morte 57. La mémoire morte 57 comporte, tabulés, les indices à associer dans $GF(m_i^2)$ à un nombre complexe en vue de sa multiplication par un autre nombre complexe.

Un exemple d'indicage est donné par les tableaux II pour les trois premiers calculateurs élémentaires 11. Pour chaque calculateur, le tableau est rangé dans l'ordre croissant des nombres, puis dans l'ordre croissant des indices.

Re signifie : partie réelle

Im signifie : partie imaginaire.

l'élément $(0 + \widehat{1}0)$ est doté d'un indice $\times$, car il n'appartient pas au groupe cyclique et doit être traité à part. Un simple dispositif de test logique permet d'appréhender la multiplication par l'élément absorbant $(0 + \widehat{1}0)$, dont le résultat est bien sûr ce même élément nul $(0 + \widehat{1}0)$.

EP 0 314 559 B1

## TABLEAU II

Indices des éléments de GF $(3^2)$
avec $g_1 = 1 + \hat{\imath}1$ comme élément générateur

| Re | Im | Indices |
|----|----|---------|
| 0 | 0 | ✱ |
| 0 | 1 | 6 |
| 0 | 2 | 2 |
| 1 | 0 | 0 |
| 1 | 1 | 1 |
| 1 | 2 | 3 |
| 2 | 0 | 4 |
| 2 | 1 | 7 |
| 2 | 2 | 5 |

Indices des éléments de GF $(3^2)$
rangés par ordre d'indices croissants

| Re | Im | Indices |
|----|----|---------|
| 0 | 0 | ✱ |
| 1 | 1 | 1 |
| 0 | 2 | 2 |
| 1 | 2 | 3 |
| 2 | 0 | 4 |
| 2 | 2 | 5 |
| 0 | 1 | 6 |
| 2 | 1 | 7 |
| 1 | 0 | 0 |

20

TABLEAU II

Indices des éléments de GF $(7^2)$

avec $g_2 = 4 + \hat{1}1$ comme élément générateur

| Re | Im | Indices |
|---|---|---|
| 0 | 0 | x |
| 0 | 1 | 36 |
| 0 | 2 | 4 |
| 0 | 3 | 44 |
| 0 | 4 | 20 |
| 0 | 5 | 28 |
| 0 | 6 | 12 |
| 1 | 0 | 0 |
| 1 | 1 | 2 |
| 1 | 2 | 17 |
| 1 | 3 | 13 |
| 1 | 4 | 43 |
| 1 | 5 | 23 |
| 1 | 6 | 14 |
| 2 | 0 | 16 |
| 2 | 1 | 11 |
| 2 | 2 | 18 |
| 2 | 3 | 39 |
| 2 | 4 | 33 |
| 2 | 5 | 30 |
| 2 | 6 | 29 |
| 3 | 0 | 8 |
| 3 | 1 | 31 |
| 3 | 2 | 21 |
| 3 | 3 | 10 |
| 3 | 4 | 22 |
| 3 | 5 | 3 |
| 3 | 6 | 25 |

Indices des éléments de GF $(7^2)$ suite

| Re | Im | Indices |
|----|----|---------|
| 4 | 0 | 32 |
| 4 | 1 | 1 |
| 4 | 2 | 27 |
| 4 | 3 | 46 |
| 4 | 4 | 34 |
| 4 | 5 | 45 |
| 4 | 6 | 7 |
| 5 | 0 | 40 |
| 5 | 1 | 5 |
| 5 | 2 | 6 |
| 5 | 3 | 9 |
| 5 | 4 | 15 |
| 5 | 5 | 42 |
| 5 | 6 | 35 |
| 6 | 0 | 24 |
| 6 | 1 | 38 |
| 6 | 2 | 47 |
| 6 | 3 | 19 |
| 6 | 4 | 37 |
| 6 | 5 | 41 |
| 6 | 6 | 26 |

Indices des éléments de GF $(7^{2})$
rangés par ordre d'indice croissant

| Re | Im | Indices |
| --- | --- | --- |
| 0 | 0 | x |
| 4 | 1 | 1 |
| 1 | 1 | 2 |
| 3 | 5 | 3 |
| 0 | 2 | 4 |
| 5 | 1 | 5 |
| 5 | 2 | 6 |
| 4 | 6 | 7 |
| 3 | 0 | 8 |
| 5 | 3 | 9 |
| 3 | 3 | 10 |
| 2 | 1 | 11 |
| 0 | 6 | 12 |
| 1 | 3 | 13 |
| 1 | 6 | 14 |
| 5 | 4 | 15 |
| 2 | 0 | 16 |
| 1 | 1 | 17 |
| 2 | 2 | 18 |
| 6 | 3 | 19 |
| 0 | 4 | 20 |
| 3 | 2 | 21 |
| 3 | 4 | 22 |
| 1 | 5 | 23 |

Indices des éléments de GF (7$^2$)
rangés par ordre d'indices croissants suite

| Re | Im | Indices |
|---|---|---|
| 6 | 0 | 24 |
| 3 | 6 | 25 |
| 6 | 6 | 26 |
| 4 | 2 | 27 |
| 0 | 5 | 28 |
| 2 | 6 | 29 |
| 2 | 5 | 30 |
| 3 | 1 | 31 |
| 4 | 0 | 32 |
| 2 | 4 | 33 |
| 4 | 4 | 34 |
| 5 | 6 | 35 |
| 0 | 1 | 36 |
| 6 | 4 | 37 |
| 6 | 1 | 38 |
| 2 | 3 | 39 |
| 5 | 0 | 40 |
| 6 | 5 | 41 |
| 5 | 5 | 42 |
| 1 | 4 | 43 |
| 0 | 3 | 44 |
| 4 | 5 | 45 |
| 4 | 3 | 46 |
| 6 | 2 | 47 |
| 1 | 0 | 0 |

TABLEAU II

Indices des éléments de GF $(11^2)$

avec $g_3 = 2 + \hat{1}5$ comme élément générateur

| Re | Im | Indices |
| --- | --- | --- |
| 0 | 0 | ✱ |
| 0 | 1 | 90 |
| 0 | 2 | 6 |
| 0 | 3 | 18 |
| 0 | 4 | 42 |
| 0 | 5 | 114 |
| 0 | 6 | 54 |
| 0 | 7 | 102 |
| 0 | 8 | 78 |
| 0 | 9 | 66 |
| 0 | 10 | 30 |
| 1 | 0 | 0 |
| 1 | 1 | 3 |
| 1 | 2 | 22 |
| 1 | 3 | 95 |
| 1 | 4 | 7 |
| 1 | 5 | 16 |
| 1 | 6 | 56 |
| 1 | 7 | 77 |
| 1 | 8 | 85 |
| 1 | 9 | 2 |
| 1 | 10 | 33 |
| 2 | 0 | 36 |
| 2 | 1 | 92 |
| 2 | 2 | 39 |
| 2 | 3 | 113 |
| 2 | 4 | 58 |
| 2 | 5 | 1 |
| 2 | 6 | 11 |
| 2 | 7 | 38 |

Indices des éléments de GF $(11^2)$ (suite)

| Re | Im | Indices |
|---|---|---|
| 2 | 8 | 43 |
| 2 | 9 | 69 |
| 2 | 10 | 52 |
| 3 | 0 | 48 |
| 3 | 1 | 55 |
| 3 | 2 | 13 |
| 3 | 3 | 51 |
| 3 | 4 | 64 |
| 3 | 5 | 50 |
| 3 | 6 | 70 |
| 3 | 7 | 104 |
| 3 | 8 | 81 |
| 3 | 9 | 23 |
| 3 | 10 | 5 |
| 4 | 0 | 72 |
| 4 | 1 | 47 |
| 4 | 2 | 8 |
| 4 | 3 | 74 |
| 4 | 4 | 75 |
| 4 | 5 | 79 |
| 4 | 6 | 29 |
| 4 | 7 | 105 |
| 4 | 8 | 94 |
| 4 | 9 | 88 |
| 4 | 10 | 37 |
| 5 | 0 | 24 |
| 5 | 1 | 26 |
| 5 | 2 | 101 |
| 5 | 3 | 40 |
| 5 | 4 | 119 |
| 5 | 5 | 27 |

Indices des éléments de GF $(11^2)$ (suite)

| Re | Im | Indices |
|---|---|---|
| 5 | 6 | 57 |
| 5 | 7 | 109 |
| 5 | 8 | 80 |
| 5 | 9 | 31 |
| 5 | 10 | 46 |
| 6 | 0 | 84 |
| 6 | 1 | 106 |
| 6 | 2 | 91 |
| 6 | 3 | 20 |
| 6 | 4 | 49 |
| 6 | 5 | 117 |
| 6 | 6 | 87 |
| 6 | 7 | 59 |
| 6 | 8 | 100 |
| 6 | 9 | 41 |
| 6 | 10 | 86 |
| 7 | 0 | 12 |
| 7 | 1 | 97 |
| 7 | 2 | 28 |
| 7 | 3 | 34 |
| 7 | 4 | 45 |
| 7 | 5 | 89 |
| 7 | 6 | 19 |
| 7 | 7 | 15 |
| 7 | 8 | 14 |
| 7 | 9 | 68 |
| 7 | 10 | 107 |
| 8 | 0 | 108 |
| 8 | 1 | 65 |
| 8 | 2 | 83 |

Indices des éléments de GF $(11^2)$ (suite)

| Re | Im | Indices |
|---|---|---|
| 8 | 3 | 21 |
| 8 | 4 | 44 |
| 8 | 5 | 10 |
| 8 | 6 | 110 |
| 8 | 7 | 4 |
| 8 | 8 | 111 |
| 8 | 9 | 73 |
| 8 | 10 | 115 |
| 9 | 0 | 96 |
| 9 | 1 | 112 |
| 9 | 2 | 9 |
| 9 | 3 | 103 |
| 9 | 4 | 98 |
| 9 | 5 | 71 |
| 9 | 6 | 61 |
| 9 | 7 | 118 |
| 9 | 8 | 53 |
| 9 | 9 | 99 |
| 9 | 10 | 32 |
| 10 | 10 | 60 |
| 10 | 1 | 93 |
| 10 | 2 | 62 |
| 10 | 3 | 25 |
| 10 | 4 | 17 |
| 10 | 5 | 116 |
| 10 | 6 | 76 |
| 10 | 7 | 67 |
| 10 | 8 | 35 |
| 10 | 9 | 82 |
| 10 | 10 | 63 |

TABLEAU II

Indices des éléments de GF ($11^2$)
rangés par ordre d'indices croissants

| Re | Im | Indices |
|---|---|---|
| 0 | 0 | ✱ |
| 2 | 5 | 1 |
| 1 | 9 | 2 |
| 1 | 1 | 3 |
| 8 | 7 | 4 |
| 3 | 10 | 5 |
| 0 | 2 | 6 |
| 1 | 4 | 7 |
| 4 | 2 | 8 |
| 9 | 2 | 9 |
| 8 | 5 | 10 |
| 2 | 6 | 11 |
| 7 | 0 | 12 |
| 3 | 2 | 13 |
| 7 | 8 | 14 |
| 7 | 7 | 15 |
| 1 | 5 | 16 |
| 10 | 4 | 17 |
| 0 | 3 | 18 |
| 7 | 6 | 19 |
| 6 | 3 | 20 |
| 8 | 3 | 21 |
| 1 | 2 | 22 |
| 3 | 9 | 23 |
| 5 | 0 | 24 |
| 10 | 3 | 25 |
| 5 | 1 | 26 |
| 5 | 5 | 27 |
| 7 | 2 | 28 |

29

Indices des éléments de GF $(11^2)$
rangés par ordre d'indices croissants (suite)

| Re | Im | Indices |
|----|----|---------|
| 4 | 6 | 29 |
| 0 | 10 | 30 |
| 5 | 9 | 31 |
| 9 | 10 | 32 |
| 1 | 10 | 33 |
| 7 | 3 | 34 |
| 10 | 8 | 35 |
| 2 | 0 | 36 |
| 4 | 10 | 37 |
| 2 | 7 | 38 |
| 2 | 2 | 39 |
| 5 | 3 | 40 |
| 6 | 9 | 41 |
| 0 | 4 | 42 |
| 2 | 8 | 43 |
| 8 | 4 | 44 |
| 7 | 4 | 45 |
| 5 | 10 | 46 |
| 4 | 1 | 47 |
| 3 | 0 | 48 |
| 6 | 4 | 49 |
| 3 | 5 | 50 |
| 3 | 3 | 51 |
| 2 | 10 | 52 |
| 9 | 8 | 53 |
| 0 | 6 | 54 |
| 3 | 1 | 55 |
| 1 | 6 | 56 |
| 5 | 6 | 57 |
| 2 | 4 | 58 |

Indices des éléments de GF $(11^2)$
rangés par ordre d'indices croissants (suite)

| | | |
|---|---|---|
| 6 | 7 | 59 |
| 10 | 0 | 60 |
| 9 | 6 | 61 |
| 10 | 2 | 62 |
| 10 | 10 | 63 |
| 3 | 4 | 64 |
| 8 | 1 | 65 |
| 0 | 9 | 66 |
| 10 | 7 | 67 |
| 7 | 9 | 68 |
| 2 | 9 | 69 |
| 3 | 6 | 70 |
| 9 | 5 | 71 |
| 4 | 0 | 72 |
| 8 | 9 | 73 |
| 4 | 3 | 74 |
| 4 | 4 | 75 |
| 10 | 6 | 76 |
| 1 | 7 | 77 |
| 0 | 8 | 78 |
| 4 | 5 | 79 |
| 5 | 8 | 80 |
| 3 | 8 | 81 |
| 10 | 9 | 82 |
| 8 | 2 | 83 |
| 6 | 0 | 84 |
| 1 | 8 | 85 |
| 6 | 10 | 86 |
| 6 | 6 | 87 |
| 4 | 9 | 88 |
| 7 | 5 | 89 |
| 0 | 1 | 90 |

Indices des éléments de GF $(11^2)$
rangés par ordre d'indices croissants (suite)

| Re | Im | Indices |
|----|----|---------|
| 6 | 2 | 91 |
| 2 | 1 | 92 |
| 10 | 1 | 93 |
| 4 | 8 | 94 |
| 1 | 3 | 95 |
| 9 | 0 | 96 |
| 7 | 1 | 97 |
| 9 | 4 | 98 |
| 9 | 9 | 99 |
| 6 | 8 | 100 |
| 5 | 2 | 101 |
| 0 | 7 | 102 |
| 9 | 3 | 103 |
| 3 | 7 | 104 |
| 4 | 7 | 105 |
| 6 | 1 | 106 |
| 7 | 10 | 107 |
| 8 | 0 | 108 |
| 5 | 7 | 109 |
| 8 | 6 | 110 |
| 8 | 8 | 111 |
| 9 | 1 | 112 |
| 2 | 3 | 113 |
| 0 | 5 | 114 |
| 8 | 10 | 115 |
| 10 | 5 | 116 |
| 6 | 5 | 117 |
| 9 | 7 | 118 |
| 5 | 4 | 119 |
| 1 | 0 | 0 |

Sur la figure 7, on peut voir un exemple de réalisation d'un addditionneur modulo 120. L'additionneur modulo 120 comporte un additionneur sur sept bits 551 et une table 57. L'additionneur 551 reçoit par deux bus 33 les nombres à ajouter, par exemple sur sept bits. L'additionneur 551 comporte sept lignes de sortie de résultat de poids 0 à 6 ainsi que R, la ligne R propageant la retenue. Les lignes de poids 3 à 6 ainsi que la retenue sont connectées à l'entrée de la table 57 de $2^5$ x 4 octets. Les résultats sont présents sur les

32

lignes de poids 0 à 2 issues directement de l'additionneur 551 et sur les lignes de poids 3 à 6 issues de la table 57.

Sur la figure 8, est illustré le principe de calcul par tabulation d'une fonction utilisée dans le dispositif selon l'invention. Deux bus de donnée 321 et 322 constituent le bus d'adresse 333 d'une mémoire permanente 57. Dans la mémoire 57 est tabulée la fonction désirée, par exemple l'addition ou la soustraction. Le résultat de l'opération est émis par la mémoire permanente 57 sur le bus de donnée 323.

Quelques exemples d'opérations tabulées pouvant être mises en oeuvre sont donnés dans les tableaux III à VI.

Le tableau III contient l'addition modulo 8.

Le tableau IV contient l'addition modulo 3.

Le tableau V contient l'addition modulo 7.

EP 0 314 559 B1

Le tableau VI contient l'addition modulo 11.

## TABLEAU III

| + | 0 | 1 | 2 | 3 | 4 | 5 | 6 | 7 |
|---|---|---|---|---|---|---|---|---|
| 0 | 0 | 1 | 2 | 3 | 4 | 5 | 6 | 7 |
| 1 | 1 | 2 | 3 | 4 | 5 | 6 | 7 | 0 |
| 2 | 2 | 3 | 4 | 5 | 6 | 7 | 0 | 1 |
| 3 | 3 | 4 | 5 | 6 | 7 | 0 | 1 | 2 |
| 4 | 4 | 5 | 6 | 7 | 0 | 1 | 2 | 3 |
| 5 | 5 | 6 | 7 | 0 | 1 | 2 | 3 | 4 |
| 6 | 6 | 7 | 0 | 1 | 2 | 3 | 4 | 5 |
| 7 | 7 | 0 | 1 | 2 | 3 | 4 | 5 | 6 |

## TABLEAU IV
### Addition modulo $m_1 = 3$

| + | 0 | 1 | 2 |
|---|---|---|---|
| 0 | 0 | 1 | 2 |
| 1 | 1 | 2 | 0 |
| 2 | 2 | 0 | 1 |

## TALEAU V
### Addition modulo $m_2 = 7$

| + | 0 | 1 | 2 | 3 | 4 | 5 | 6 |
|---|---|---|---|---|---|---|---|
| 0 | 0 | 1 | 2 | 3 | 4 | 5 | 6 |
| 1 | 1 | 2 | 3 | 4 | 5 | 6 | 0 |
| 2 | 2 | 3 | 4 | 5 | 6 | 0 | 1 |
| 3 | 3 | 4 | 5 | 6 | 0 | 1 | 2 |
| 4 | 4 | 5 | 6 | 0 | 1 | 2 | 3 |
| 5 | 5 | 6 | 0 | 1 | 2 | 3 | 4 |
| 6 | 6 | 0 | 1 | 2 | 3 | 4 | 5 |

34

# EP 0 314 559 B1

## TABLEAU VI
### Addition modulo $m_3 = 11$

| + | 0 | 1 | 2 | 3 | 4 | 5 | 6 | 7 | 8 | 9 | 10 |
|---|---|---|---|---|---|---|---|---|---|---|----|
| 0 | 0 | 1 | 2 | 3 | 4 | 5 | 6 | 7 | 8 | 9 | 10 |
| 1 | 1 | 2 | 3 | 4 | 5 | 6 | 7 | 8 | 9 | 10 | 0 |
| 2 | 2 | 3 | 4 | 5 | 6 | 7 | 8 | 9 | 10 | 0 | 1 |
| 3 | 3 | 4 | 5 | 6 | 7 | 8 | 9 | 10 | 0 | 1 | 2 |
| 4 | 4 | 5 | 6 | 7 | 8 | 9 | 10 | 0 | 1 | 2 | 3 |
| 5 | 5 | 6 | 7 | 8 | 9 | 10 | 0 | 1 | 2 | 3 | 4 |
| 6 | 6 | 7 | 8 | 9 | 10 | 0 | 1 | 2 | 3 | 4 | 5 |
| 7 | 7 | 8 | 9 | 10 | 0 | 1 | 2 | 3 | 4 | 5 | 6 |
| 8 | 8 | 9 | 10 | 0 | 1 | 2 | 3 | 4 | 5 | 6 | 7 |
| 9 | 9 | 10 | 0 | 1 | 2 | 3 | 4 | 5 | 6 | 7 | 8 |
| 10 | 10 | 0 | 1 | 2 | 3 | 4 | 5 | 6 | 7 | 8 | 9 |

Pour effectuer des transcodages tabulés on utilise un bus d'adresse unique 333. La valeur à transcoder est présente sur le bus 333. La valeur du transcodage désiré est stockée dans la mémoire permanente 57 à l'adresse égale à la valeur à transcoder.

Le tableau VII donne les valeurs du transcodage pour les trois premiers groupes de Galois.

## TABLEAU VII

| Nombre entier | Résidu mod $m_1 = 3$ | Résidu mod $m_2 = 7$ | Résidu mod $m_3 = 11$ |
|---|---|---|---|
| - 5 | 1 | 2 | 6 |
| - 4 | 2 | 3 | 7 |
| - 3 | 0 | 4 | 8 |
| - 2 | 1 | 5 | 9 |
| - 1 | 2 | 6 | 10 |
| 0 | 0 | 0 | 0 |
| 1 | 1 | 1 | 1 |
| 2 | 2 | 2 | 2 |
| 3 | 0 | 3 | 3 |
| 4 | 1 | 4 | 4 |
| 5 | 2 | 5 | 5 |

35

L'utilisation de la tabulation est toutefois limitée par la taille de mémoires permanentes dont on dispose.

Pour avoir, de nouveau, des nombres en notation positionnelle, on peut formaliser ce qui se passe dans l'opération de changement de base, indépendamment de la façon dont on la réalisera.

Soit : (bj), la base orthogonale du module R (q) où

$$q = \prod_{i=1}^{k} m_i$$

(bi), une base non orthogonale du module R (q) où :

$$i = 0, 1, 2, \ldots, n$$

avec $n = [\log_b q]$   (q1), une autre base non orthogonale, celle des bases mélangées :

$$q_1 = \prod_{j=1}^{1-1} mj \quad \text{pour } 1 = 2, \ldots, k$$

$$\text{et } q_1 = 1$$

Tout élément de R (q) admet donc une décomposition unique dans ces bases :

$$x = \sum_{j=1}^{k} x_j \cdot b_j = \sum_{i=0}^{n} c_i \cdot b^i = \sum_{j=1}^{k} a_1 \cdot q_1$$

La transformation des coordonnées (changement de base) s'effectue en écrivant l'ancienne base en termes de la nouvelle, puis en substituant ces expressions dans l'ancienne décomposition.

Dans un premier cas on réalise le transcodage de la notation positionnelle base (bi) en notation résiduelle base (bj) :

$$x = \sum_{i=0}^{n} c_i \cdot b^i = \sum_{j=1}^{k} x_i \cdot b_j \quad \text{avec } 0 \leqslant c_i < b \text{ et } 0 \leqslant x_j < m_j$$

Par le thérorème du Reste chinois, on obtient :

$b_j = M_j \cdot M_j^{-1}$ avec $m_j \cdot M_j = q$ et $M_j \cdot M_j^{-1} \equiv 1 \bmod m_j$

$$b^i = \sum_{j=1}^{k} \alpha_{ij} \; b_j \quad \text{où} \quad 0 \leqslant \alpha_{ij} < m_j$$

Alors :

$$x = \sum_{i=0}^{n} c_i \cdot b^i$$

$$x = \sum_{i=0}^{n} c_i \left( \sum_{j=1}^{k} \alpha_{ij} \cdot b_j \right)$$

$$x = \sum_{j=1}^{k} \left( \sum_{i=0}^{n} c_i \cdot \alpha_{ij} \right) \cdot b_j$$

$$x = \sum_{j=1}^{k} x'_j \, b_j$$

où :

$$0 \leqslant x'_j = \sum_{i=0}^{n} c_i \cdot \alpha_{ij} < (n+1) \cdot b \cdot m_j$$

L'écriture unique de x en base $(b_j)$ impose :

$$0 \leq x_j < m_j$$

Et donc on écrit :

$$x'_j = x_j + r_j \cdot m_j \qquad x'_j \equiv x_j \bmod m_j$$

Comme le transfert de la retenue est inutile en base $(b_j)$ donc :

$$x_j \equiv \sum_{i=0}^{n} c_i \cdot \alpha_{ij} \bmod m_j$$

Si les digits $c_i$ sont des bits (b = 2), alors le transcodage de la notation binaire à la notation décimale revient à une suite d'additions de termes $\alpha_{ij}$ modulo $m_j$. Pour des dynamiques qui le permettent, par exemple pour n = 13, il est avantageux de tabuler le transcodage à partir du code $c_i$.

Il est toujours possible d'effectuer le transcodage en utilisant des additionneurs modulo $m_j$.

Dans un second cas, on réalise le transcodage de la notation résiduelle base $(b_j)$ en notation positionnelle à bases mélangées base $(q_1)$.

C'est le transcodage le plus utilisé pour l'arithmétique résiduelle, et celui qu'on emploierait en cours de traitement, afin de comparer des résultats intermédiaires par exemple, parce qu'il utilise uniquement les opérateurs modulo mj.

$$x = \sum_{j=1}^{k} x_j \cdot b_j = \sum_{1=1}^{k} a_1 \cdot q_1 \quad \text{avec} \quad \begin{array}{l} 0 \leqslant x_j < m_j \\ 0 \leqslant a_1 < m_1 \end{array}$$

On écrit :

$$b_j = \sum_{l=1}^{k} \beta_{jl} \, q_l \qquad \text{où} \quad 0 \leqslant \beta_{jl} < m_l$$

Alors :

$$x = \sum_{i=1}^{k} x_j \cdot \left( \sum_{l=1}^{k} \beta_{jl} \cdot q_l \right)$$

$$x = \sum_{l=1}^{k} \left( \sum_{i=1}^{k} x_j \cdot \beta_{jl} \right) \cdot q_l$$

$$x = \sum_{l=1}^{k} a'_l \cdot q_l$$

$$0 \leqslant a'_l = \sum_{i=1}^{k} x_j \cdot \beta_{jl} < k \cdot m_l \quad \left( \sum_{i=1}^{k} m_i \right)$$

Or l'unicité de l'écriture x impose :

$$0 \leq a_l < m_l$$

Par conséquent :

$$a'_1 = a_1 + r_1 \cdot m_1 \qquad a'_1 \equiv a_1 \bmod m_1$$

Seulement, l'arithmétique associée à la notation positionnelle exige le transfert d'une retenue d'un digit à l'autre. L'algorithme se présente donc comme suit :

$$x = \sum_{l=1}^{k} a'_l \cdot q_l$$

$$x = a'_1 \cdot q_1 + a'_2 \cdot q_2 + \ldots + a'_k \cdot q_k$$
$$x = (a_1 + r_1 \cdot m_1) \cdot q_1 + a'_2 \, q_2 + \ldots + a'_k \, q_k$$
$$\text{Or } m_i \cdot q_i = q_{i+1} \text{ et donc } m_1 = q_2$$
$$x = a_1 \cdot q_1 + (r_1 + a'_2) \, q_2 + \ldots + a'_k \, q_k$$
$$x = a_1 \cdot q_1 + (a_2 + r_2 \cdot m_2) \, q_2 + \ldots + a'_k \, q_k$$
$$x = a_1 \cdot q_1 + a_2 \cdot q_2 + (r_2 + a'_3) \, q_3 + \ldots + a'_k \, q_k$$

etc...

$$x = a_1 \cdot q_1 + a_2 \cdot q_2 + a_3 \cdot q_3 + \ldots + a_k \, q_k + r_k \cdot q$$

et

$$x \equiv a_1 \, q_1 + a_2 \, q_2 + \ldots + a_k \, q_k \bmod q$$

Le transcodage utilise donc l'arithmétique modulaire (modulo $m_j$), mais doit conserver l'information de retenue pour la passer successivement au digit suivant.

L'algorithme de transcodage proposé par Szabo se décompose comme suit :
comme $q_1 = 1$, $x_1 = a_1$ (initialisation)

$$x = x_1 \cdot b_1 \cdot x_2 \cdot b_2 + \ldots + x_k \cdot b_k$$

$$= a_1 \cdot 1 + a_2 m_1 + a_3 m_1 m_2 + \ldots + a_k m_1 m_2 \ldots m_{k-1}$$

Première itération :

On retranche $a_1$ aux deux membres de l'équation ci-dessus. Mais on sait qu'on peut opérer sur chaque digit résiduel indépendamment, modulo $m_j$.

$(x_1 - a_1) b_1 + (x_2 - a_1) b_2 + \ldots + (x_k - a_1) b_k = a_2 m_1 + a_3 m_1 m_2 + \ldots + a_k m_1 m_2 \ldots m_{k-1}$
Or $x_1 - a_1 = 0$

On peut diviser le membre de droite par $m_1$, puisque chaque produit $a_1 \cdot q_1$ le contient, et pour le membre de gauche, $m_1$ étant mutuellement premier avec $m_j$, $j \neq 1$, l'inverse de $m_1$ existe modulo $m_j$, $j \neq 1$ ; notons le $m_{1j}^{-1}$, $j \neq 1$.
Alors, on obtient :

$m_{12}^{-1} (x_2 - a_1) b_2 + m_{13}^{-1} (x_3 - a_1) b_3 + \ldots + m_{1k}^{-1} (x_k - a_1) b_k = a_2 + a_3 m_2 + \ldots + a_k m_2 m_3 \ldots m_{k-1}$

Cette équation, prise modulo $m_2$, donne :

$m_{12}^{-1} (x_2 - a_1) a_2 \bmod m_2$

Deuxième itération :

On recommence le même processus, en retranchant a2 de part et d'autre de l'équation :

$[m_{13}^{-1} (x_3 - a_1) - a_2] b_3 + \ldots + [m_{1k}^{-1} (x_k - a_1) - a_2] b_k = a_3 m_2 + \ldots + a_k m_3 \ldots m_{k-1}$

On divise par $m_2$ à droite, on multiplie à gauche par l'inverse de $m_2 \bmod m_j$, $j \neq 2$ :

$m_{23}^{-1} [m_{13}^{-1} (x_3 - a_1) - a_2] b_3 + \ldots + m_{2k}^{-1} [m_{1k}^{-1} (x_k - a_1) - a_2] b_k$
$= a_3 + a_4 m_3 + \ldots + a_k m_3 \ldots m_{k-1}$

L'équation, modulo $m_3$, donne :

$m_{23}^{-1} [m_{13}^{-1} (x_3 - a_1) - a_2] \equiv a_3 \bmod m_3$

et ainsi de suite, jusqu'à l'obtention de $a_k$.
L'algorithme nécessite $(k - 1)$ itérations, mais souffre d'une dépendance des résidus entre eux à chaque itération, par ce qu'on doit transmettre le digit $a_1$ juste trouvé aux autres résidus, pour le soustraire.

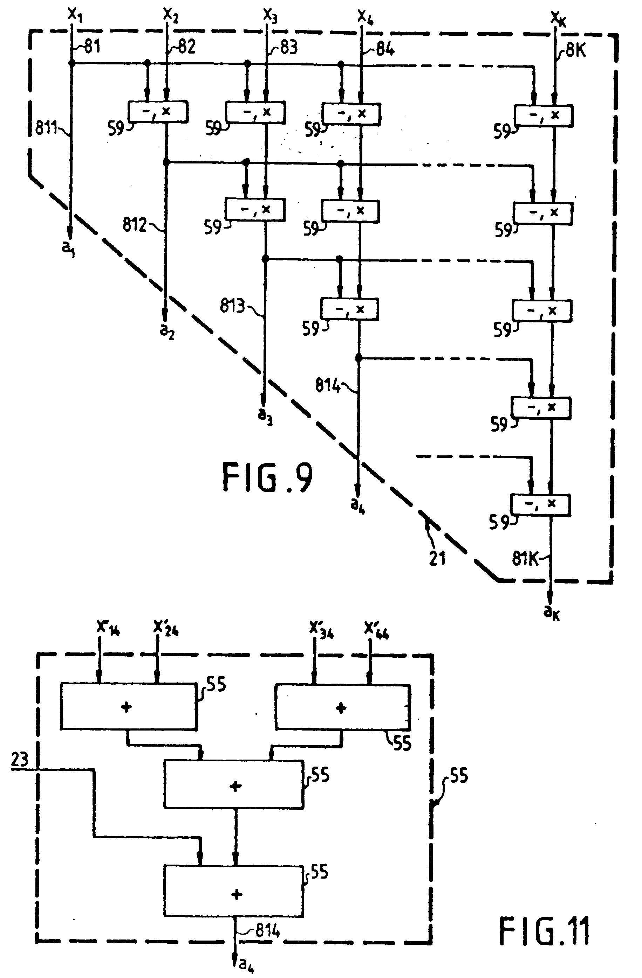

Sur la figure 9, on peut voir un exemple de module de codage 21 utilisant l'algorithme de Szabo. Le module 21 comporte k lignes 81 à 8k susceptibles de fournir les chiffres à traiter. La première ligne 81 est connectée, d'une part, à une ligne 811 fournissant un premier résultat $Q_1$ et d'autre part à des premières entrées de k-1 soustracteurs multiplieurs 59. Les lignes 82 à 8k sont connectées à des secondes entrées des soustracteurs multiplieurs 59.
La sortie du multiplieur soustracteur connectée à la ligne 82 est reliée, d'une part, à une ligne 812 susceptible de fournir un second résultat $Q_2$, et d'autre part, à des premières entrées de k-2 soustracteurs multiplieurs 59.
Ainsi de suite jusqu'à un dernier étage ne comportant plus qu'un soustracteur multiplieur 59 unique dont la sortie est reliée à une ligne 81k.

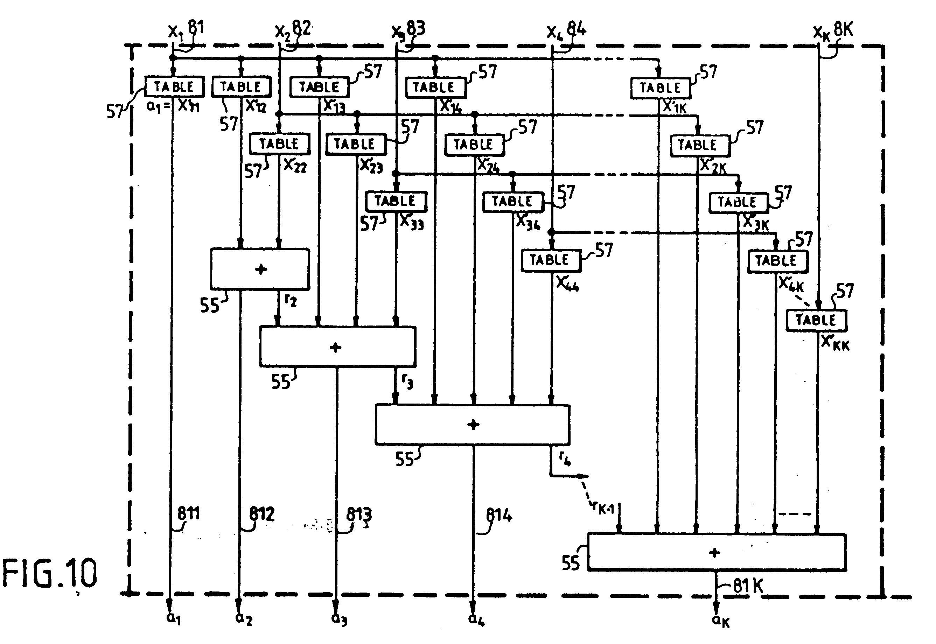

Sur la figure 10, on peut voir un module de transcodage 21 ou 22 dans lequel le passage de la retenue est reportée à la fin. Ainsi, par une architecture parallèle, le module de transcodage 21 ou 22 exploite l'indépendance des résultats sur chaque chiffre pour diminuer le temps de calcul.

Nous avons vu précédemment que la conversion comprend deux étapes :

- calcul de $a'_1$ :
  avec :

$$a'_1 = \sum_{i=1}^{k} x_j \cdot \beta_{j1}$$

- mise en forme : $(a'_1) \rightarrow (a_1)$ au cours de laquelle on transmet la retenue au digit suivant.

On peut facilement établir les relations suivantes :

$$a'_1 = x_1 \cdot 1$$

$$a'_2 = x_1 \cdot \beta_{12} + x_2 \cdot \beta_{22}$$

$$a'_3 = x_1 \cdot \beta_{13} + x_2 \cdot \beta_{23} + x_3 \cdot \beta_{33}$$

$$\cdot$$

$$\cdot$$

$$\cdot$$

$$a'_k = x_1 \cdot \beta_{1k} + x_2 \cdot \beta_{2k} + x_3 \cdot \beta_{3k} + \ldots + x_k \cdot \beta_{kk}$$

$$\text{où} \quad 0 \leqslant \beta_{j1} < m_1$$

Compte tenu de l'arithmétique complexe sans multiplication réalisée jusqu'ici, il est avantageux de ne pas effectuer les opérations indiquées, d'autant qu'il s'agit de conserver en plus la retenue.

La nouvelle méthode repose sur l'observation suivante :

On peut mémoriser le code à bases mélangées de :

$$x_j \cdot \left[ \sum_{1=1}^{k} \beta_{j1} \cdot q_1 \right]$$

qui serait ainsi adressé par $x_j$. Ce faisant, on se débarasse de la retenue importante associée à la multiplication.

$$x_j \cdot \left[ \sum_{1=1}^{k} \beta_{j1} \cdot q_1 \right] = \sum_{1=1}^{k} x'_{j1} \, q_1 \quad \text{avec} \quad 0 \leqslant x'_1 < m_1$$

EP 0 314 559 B1

L'algorithme se simplifie alors :

$$a'_1 = x'_{11}$$

$$a'_2 = x'_{12} + x'_{22}$$

$$a'_3 = x'_{13} + x'_{23} + x'_{33}$$

.

.

.

$$a'_k = x'_{1k} + x'_{2k} + x'_{3k} + \cdots + x'_{kk}$$

IL reste à effectuer des additions avec retenue, et à transmettre la retenue au digit suivant. Or il est évident que l'information de retenue du terme $a_1$ à transmettre est disponible avant la fin du calcul du terme $a'_{1+1}$, et que celle-ci est petite.

Le module de transcodage 21 ou 22 comporte k lignes d'entrée 81 à 8k susceptibles de propager les chiffres $x_1$ à $x_k$ à transcoder. La ligne d'entrée 81 est reliée à k mémoires permanentes 57. La ligne d'entrée 82 est reliée à k-1 mémoires permanentes 57. La ligne d'entrée 83 est reliée à k-2 mémoires permanentes 57. Le nombre de mémoires permanentes décroissant d'une unité à chaque nouvelle ligne d'entrée. La ligne d'entrée 8k est reliée à une mémoire permanente unique 57.

La première mémoire permanente 57 reliée à la ligne d'entrée 81 est reliée à la ligne de sortie 811 susceptible de fournir un chiffre transcodé $a_1$.

La seconde mémoire permanente 57 reliée à la ligne d'entrée 81 est reliée à une première entrée d'un additionneur 55 effectuant l'addition avec retenue modulo $m_2$.

La troisième mémoire permanente 57 reliée à la ligne d'entrée 81 est connectée à une des quatre entrées d'un additionneur 55 effectuant l'addition avec retenue modulo $m_3$.

La quatrième mémoire permanente 57 reliée à la ligne d'entrée 81 est connectée à l'une des cinq entrées d'un additionneur 55 effectuant l'addition avec retenue modulo $m_4$.

Et ainsi jusqu'à la $k^{ième}$ mémoire permanente 57 reliée à la ligne d'entrée 81 et connectée à l'une des k-1 entrées d'un additionneur 55 effectuant l'addition modulo $m_k$.

La retenue de l'additionneur 55 modulo $m_2$ est reliée à l'une des entrées de l'additionneur 55 modulo $m_3$.

La retenue de l'additionneur 55 modulo $m_3$ est reliée à l'une des entrées de l'additionneur 55 modulo $m_4$.

Et ainsi de suite jusqu'à la retenue de l'additionneur 55 modulo $m_{k-1}$ qui est reliée à l'une des entrées de l'additionneur 55 modulo $m_k$.

Une première mémoire permanente 57 reliée à la ligne d'entrée 82 est reliée à une entrée de l'additionneur 55 modulo $m_2$.

Une seconde mémoire permanente 57 reliée à la ligne d'entrée 82 est connectée à l'une des entrées de l'additionneur 55 modulo $m_3$.

Et ainsi jusqu'à la $k^{ième}$ mémoire permanente 57 reliée à la ligne d'entrée 82 qui est connectée à l'une des entrées de l'additionneur 55 modulo $m_k$.

Les mémoires permanentes 57 reliées à la $i^{ième}$ ligne d'entrée (8i) sont connectées de l'additionneur 55 effectuant l'addition modulo $m_i$ jusqu'à l'additionneur 55 effectuant l'addition modulo $m_k$.

Les lignes de sortie 812 à 81k sont reliées respectivement aux sorties des additionneurs 55 modulo $m_2$ à modulo $m_k$.

Sur la figure 10, les valeurs d'entrée sont notées $x_i$, de $x_1$ à $x_k$ ; les valeurs obtenues à partir d'une mémoire permanente $x'_{ij}$, de $x'_{11}$ à $x'_{kk}$, les retenues $r_i$ de $r_2$ à $r_{k-1}$ ; les résultats $a_i$ de $a_1$ à $a_k$.

Les additionneurs modulo $m_i$ sont par exemple réalisés par tabulation.

Avantageusement, on utilise pour le transcodage des additionneurs 55 à structure arborescente dans lesquels la retenue de la branche précédente est ajoutée au dernier étage desdits additionneurs. Un exemple d'additionneur modulo $m_4$ à structure arborescente est illustré par la figure 11. Sur la figure 11 on

41

a utilisé la même notation que sur la figure 10.

L'additionneur 53 modulo $m_4$ de la figure 11 comporte quatre additionneurs élémentaires notés eux aussi 55.

Chaque additionneur élémentaire 55 reçoit deux chiffres à additionner et fournit un résultat. Les deux premiers additionneurs élémentaires 55 reçoivent respectivement $x'_{14}$, $x'_{24}$ et $x'_{34}$, $X'_{44}$. Le troisième additionneur élémentaire 55 additionne les résultats des deux premiers additionneurs élémentaires 55. Le quatrième additionneur élémentaire 55 ajoute le reste $r_3$ de la branche précédente au résultat obtenu par le troisième additionneur élémentaire 55. Le résultat $a_4$ de la sommation effectuée par le quatrième additionneur élémentaire 55 est émis sur une ligne 814.

Le temps total de conversion est réduit au temps de sommation du terme $a_k$, soit $(1 + [\log 2 (k = 1)])$ fois le temps d'addition élémentaire, où $[x]$ signifie l'entier immédiatement supérieur à $x$.

Le débit est alors déterminé par l'inverse du temps le plus long, entre le temps d'une lecture de mémoire et le temps de conversion.

Cette méthode est, on le voit, bien plus rapide que la méthode classique de Szabo.

Transcodage : notation positionnelle - base $(q_1)$ en rotation positionnelle base $(b_1)$ :

Cette conversion ne concerne que le résultat final, pour se ramener, si on le désire, en notation positionnelle classique :

$$x = \sum_{l=1}^{k} a_l \cdot q_l = \sum_{i=0}^{m} c_i \cdot b^i$$

$$x = \sum_{i=0}^{n} \left( \sum_{l=1}^{k} a_l \cdot \gamma_{li} \right) \cdot b^i$$

La conversion implique également de manipuler une retenue, mais si on travaille en notation binaire (ce qui devrait arriver le plus souvent), $\gamma_{1i}$ prend les valeurs 0 ou 1, et la conversion ne demande que des additionneurs, au nombre maximal de $k$ par branche, et ayant un champ de bits maximal de l'ordre de $\log 2$ $q$.

Recomposition de $Z = AX + BY$ dans $R(q^2)$. Le transcodage en base $(q1)$ est donné par le tableau VIII

## TABLEAU VIII

### Code à bases mélangées des résidus

| x1<br>b1 = 154 | x2<br>b2 = 99 | x3<br>b3 = 210 | a1<br>q1 = 1 | a2<br>q2 = 3 | a3<br>q3 = 21 |
|---|---|---|---|---|---|
| 0 | 0 | 0 | 0 | 0 | 0 |
| 1 | 0 | 0 | 1 | 2 | 7 |
| 2 | 0 | 0 | 2 | 4 | 3 |
| 0 | 1 | 0 | 0 | 5 | 4 |
| 0 | 2 | 0 | 0 | 3 | 9 |
| 0 | 3 | 0 | 0 | 1 | 3 |
| 0 | 4 | 0 | 0 | 6 | 7 |
| 0 | 5 | 0 | 0 | 4 | 1 |
| 0 | 6 | 0 | 0 | 2 | 6 |
| 0 | 0 | 1 | 0 | 0 | 10 |
| 0 | 0 | 2 | 0 | 0 | 9 |
| 0 | 0 | 3 | 0 | 0 | 8 |
| 0 | 0 | 4 | 0 | 0 | 7 |
| 0 | 0 | 5 | 0 | 0 | 6 |
| 0 | 0 | 6 | 0 | 0 | 5 |
| 0 | 0 | 7 | 0 | 0 | 4 |
| 0 | 0 | 8 | 0 | 0 | 3 |
| 0 | 0 | 9 | 0 | 0 | 2 |
| 0 | 0 | 10 | 0 | 0 | 1 |

Le dispositif objet de la présente invention permet d'effectuer des calculs numérique très rapidement. Selon le type de calcul nécessaire le dispositif selon l'invention constituera un coprocesseur d'un calculateur classique, un calculateur comportant un calculateur frontal (non représenté) ou un calculateur entièrement autonome.

Ainsi le dispositif selon l'invention peut être réalisé sous diverses formes selon la puissance de calcul désirée et la technologie employée.

L'invention s'applique notamment au calcul numérique.

L'invention s'applique principalement au traitement du signal et au filtrage numérique.

**Revendications**

1.  Dispositif de calcul comportant :
    - un module de codage numérique (21) transcrivant des nombres complexes d'une notation positionnelle à une notation résiduelle ;
    - un module de calcul (1) placé en sortie du circuit de codage numérique effectuant des calculs sur les composantes en notation résiduelle des nombres complexes ;
    - un module de décodage numérique (22) placé en sortie du module de calcul transcrivant en notation positionnelle les résultats délivrés par le module de calcul en notation résiduelle ledit dispositif de calcul étant caractérisé en ce que le module de codage transcrit les nombres complexes dans une notation résiduelle avec des résidus calculés modulo des nombres premiers $m_i$ de la forme $m_i = 4 k + 3$ où k est un entier positif .

2. Dispositif de calcul selon la revendication 1, caractérisé en ce que le module de calcul (1) comporte des moyens (57) permettant d'associer à chaque nombre complexe un indice tel qu'une multiplication de deux nombres complexes corresponde, de façon bi-univoque, à une addition desdits indices.

3. Dispositif de calcul selon la revendication 1, caractérisé en ce qu'il comporte un module de commande (6) supervisant le fonctionnement du module de calcul (1) et recevant d'une mémoire programme (404) les instructions nécessaires à l'enchaînement désiré des calculs.

4. Dispositif de calcul selon la revendication 1, caractérisé en ce qu'il comporte des bus reliant le module de calcul (1) à des mémoires (41, 42,402,403) internes ou externes contenant des nombres écrits en notation résiduelle.

5. Dispositif de calcul selon la revendication 4, caractérisé en ce que le module de calcul (1) est relié par un bus (1) à une mémoire permanente (402).

6. Dispositif de calcul selon la revendication 1, caractérisé en ce que le module de calcul (1) comporte les moyens nécessaires pour exécuter des calculs de corrélation et de convolution.

7. Dispositif de calcul selon la revendication 1, caractérisé en ce que le module de calcul (1) comporte des mémoires permanentes (57) dans lesquelles sont stockées des fonctions tabulées.

8. Dispositif de calcul selon la revendication 1, caractérisé en ce que le module de décodage (22) comporte des chemins de données permettant d'effectuer les opérations d'addition de retenue en fin du calcul de transcodage effectué sur chaque chiffre.

**Claims**

1. Computing device including:
   - a digital encoding module (21) transcribing complex numbers from a positional notation into a residue notation;
   - a computing module (1) placed at the output of the digital encoding circuit performing computations on the components in residue notation of complex numbers;
   - a digital decoding module (22) placed at the output of the computing module transcribing into positional notation the results delivered in residue notation by the computing module, the said computing device being characterised in that the encoding module transcribes the complex numbers into a residue notation with residues computed modulo prime numbers $m_i$ of the form $m_i = 4k + 3$ where k is a positive integer.

2. Computing device according to Claim 1, characterised in that the computing module (1) includes means (57) enabling an index to be associated with each complex number, such that a multiplication of two complex numbers corresponds, in one-to-one fashion, to an addition of the said indices.

3. Computing device according to Claim 1, characterised in that it includes a control module (6) supervising the operation of the computing module (1) and receiving from a program memory (404) the instructions required for the desired sequencing of the computations.

4. Computing device according to Claim 1, characterised in that it includes buses connecting the computing module (1) to internal or external memories (41, 42, 402, 403) containing numbers written in residue notation.

5. Computing device according to Claim 4, characterised in that the computing module (1) is connected by a bus (1) to a permanent memory (402).

6. Computing device according to Claim 1, characterised in that the computing module (1) includes the means required to execute correlation and convolution computations.

7. Computing device according to Claim 1, characterised in that the computing module (1) includes permanent memories (57) in which tabulated functions are stored.

8. Computing device according to Claim 1, characterised in that the decoding module (22) includes data paths making it possible to perform the carry addition operations at the end of the transcoding computation performed on each digit.

**Patentansprüche**

1. Rechenvorrichtung mit:
   - einer Digitalcodierer-Einheit (21), die komplexe Zahlen in positioneller Notation in eine residuelle Notation umschreibt;
   - einer Recheneinheit (1), die am Ausgang der Digitalcodierer-Schaltung angeordnet ist und Berechnungen mit den Komponenten der komplexen Zahlen in residueller Notation ausfuhrt;
   - einer am Ausgang der Recheneinheit angeordneten Digitaldecodierer-Einheit (22), welche die von der Recheneinheit in residueller Notation ausgegebenen Ergebnisse in positionelle Notation umschreibt, wobei die Rechenvorrichtung dadurch gekennzeichnet ist, daß die Codierer-Einheit die komplexen Zahlen in eine residuelle Notation mit Resten umschreibt, die Modulo Primzahlen mi der Form $m_i = 4 k + 3$, worin k eine ganze positive Zahl ist, berechnet sind.

2. Rechenvorrichtung nach Anspruch 1, dadurch gekennzeichnet, daß die Recheneinheit (1) Mittel (57) aufweist, die es ermöglichen, jeder komplexen Zahl einen solchen Index zuzuordnen, daß eine Multiplikation von zwei komplexen Zahlen in zweieindeutiger Weise einer Addition der Indizes entspricht.

3. Rechenvorrichtung nach Anspruch 1, dadurch gekennzeichnet, daß sie eine Steuereinheit (6) umfaßt, welche die Funktion der Recheneinheit (1) überwacht und aus einem Programmspeicher (404) die für die gewünschte Verkettung der Berechnungen erforderlichen Instruktionen enthält.

4. Rechenvorrichtung nach Anspruch 1, dadurch gekennzeichnet, daß sie Busleitungen aufweist, welche die Recheneinheit (1) mit internen oder externen Speichern (41, 42, 402, 403) verbindet, die in residueller Notation geschriebene Zahlen enthalten.

5. Rechenvorrichtung nach Anspruch 4, dadurch gekennzeichnet, daß die Recheneinheit (1) über einen Bus (1) mit einem Festwertspeicher (402) verbunden ist.

6. Rechenvorrichtung nach Anspruch 1, dadurch gekennzeichnet, daß die Recheneinheit (1) die zur Durchführung von Korrelations- und Faltungsberechnungen erforderlichen Mittel umfaßt.

7. Rechenvorrichtung nach Anspruch 1, dadurch gekennzeichnet, daß die Recheneinheit (1) Festwertspeicher (57) enthalt, worin tabellenförmig geordnete Funktionen gespeichert sind.

8. Rechenvorrichtung nach Anspruch 1, dadurch gekennzeichnet, daß die Decodier-Einheit (22) Datenwege umfaßt, die es ermöglichen, die Übertrag-Additionsoperationen am Ende der für jede Ziffer erfolgten Umcodierberechnung auszuführen.

# FIG.1

EP 0 314 559 B1

FIG.2

47

FIG.3

EP 0 314 559 B1

FIG. 4

EP 0 314 559 B1

FIG. 5

50

FIG. 6

# FIG.7

# FIG.8

FIG.9

FIG.11

FIG.10

EP 0 314 559 B1